# EUROPÄISCHE PATENTSCHRIFT

(11) **EP 3 661 794 B1**
(45) Veröffentlichungstag und Bekanntmachung des Hinweises auf die Patenterteilung: **02.06.2021**
(21) Anmeldenummer: 18796613.0
(22) Anmeldetag: 26.10.2018
(51) Int. Cl.: B60K 15/035, F02M 25/08

(54) **VENTILSYSTEM FÜR EINEN KRAFTSTOFFTANK**
VALVE SYSTEM FOR A FUEL TANK
SYSTÈME DE SOUPAPE POUR RÉSERVOIR DE CARBURANT

(30) Priorität: 27.10.2017 DE 102017125283
(43) Veröffentlichungstag der Anmeldung: 10.06.2020
(73) Patentinhaber: Alfmeier Präzision SE, 91757 Treuchtlingen (DE)
(72) Erfinder: AUERNHAMMER, Helmut, 91798 Höttingen (DE); GEHLMANN, Ronny, 90584 Allersberg (DE); DÖRFLER, Erich, 86899 Landsberg (DE); MUKARONDA, Lawrence, 90451 Nürnberg (DE)
(74) Vertreter: Schlögl, Markus
(86) Internationale Anmeldenummer: PCT/EP2018/079408
(87) Internationale Veröffentlichungsnummer: WO 2019/081709

(56) Entgegenhaltungen:
- EP-A2- 2 468 555
- WO-A1-2017/090029
- US-A1- 2017 030 302

## Beschreibung

Die Erfindung betrifft ein Ventilsystem für einen Kraftstofftank eines Kraftfahrzeuges. Insbesondere betrifft die Erfindung ein Ventilsystem zur kontrollierten und/oder gesteuerten und/oder geregelten Ausbringung oder Einbringung eines Fluids, vorzugsweise Gas oder Luft oder mit kohlenwasserstoffhaltigen Kraftstoffdämpfen bzw. mit Kohlenwasserstoffen angereicherte oder gesättigte Luft, aus einem oder in einen Kraftstofftank. Mit anderen Worten: Das Ventilsystem kann im Zusammenhang mit dem Entlüften oder Belüften des Kraftstofftanks eingesetzt werden. Die nachfolgende Verwendung des Begriffs Entlüftung soll jeweils auch die Möglichkeit der Belüftung mit umfassen, das heißt ein Entlüftungskanal kann auch als Belüftungskanal oder ein Entlüftungsventil kann auch als Belüftungsventil eingesetzt werden.

Heutige Tanksysteme von Kraftfahrzeugen umfassen eine Vielzahl von einzelnen Ventilen, die jeweils unterschiedliche Aufgaben erfüllen. Eine wesentliche Aufgabe besteht darin, eine Emission von Kraftstoffdämpfen an die Umwelt zu verhindern. Handelsübliche Ottokraftstoffe haben die Eigenschaft, dass leichtflüchtige Bestandteile, genauer Kohlenwasserstoffe ausgasen. Diese Kohlenwasserstoffemissionen dürfen jedoch nicht in die Atmosphäre gelangen und werden daher durch einen Aktivkohlebehälter bzw. Aktivkohlefilter (nachfolgend auch "AKF") geleitet, in dem die Kohlenwasserstoffe zurückgehalten bzw. adsorbiert werden. Um den AKF wieder reinigen zu können, wird Frischluft aus der Umwelt durch den AKF gesaugt ("Regeneration"). Die im AKF gespeicherten Kohlenwasserstoffe werden an die vorbeistreichende Luft abgegeben, dem Motor zugeführt und dort während des Betriebs des Kraftfahrzeuges verbrannt. Die Speicherkapazität des AKF ist dabei so gewählt, dass die zwischen zwei Regenrationszyklen anfallende Menge an Kohlenwasserstoffen aufgenommen werden kann.

Wird Kraftstoff in den Tank nachgefüllt, muss die mit Kohlenwasserstoffen angereicherte Luft aus dem Tank verdrängt werden ohne direkt in die Atmosphäre zu gelangen. Bei konventionellen Tanksystemen in Europa werden Kohlenwasserstoffemissionen beim Betankungsvorgang ausschließlich über eine den Tank mit dem Einfüllstutzen verbindende Leitung rückgeführt und durch die Zapfpistole abgesaugt. Bei der Betankung des Fahrzeuges wird der AKF somit nicht, oder zumindest nicht signifikant, mit Kohlenwasserstoffen beladen.

Bei konventionellen Tanksystemen in den USA muss das Fahrzeug hingegen in der Lage sein, die beim Betankungsvorgang aus dem Tank verdrängten Kohlenwasserstoffemissionen zu speichern, was unter dem Begriff ORVR (Onboard Refueling Vapor Recovery) bekannt ist. Die dort installierten Systeme müssen sicherstellen, dass beim Betankungsvorgang keine Kohlenwasserstoffe durch den Einfüllstutzen in die Atmosphäre entweichen. Daher muss auch beim Betankungsvorgang die komplette mit Kohlenwasserstoffen angereicherte Gasmenge durch den AKF geleitet werden. Da auch durch den Einfüllstutzen Frischluft aus der Umgebung mit in den Tank gesogen wird, die sich dort mit Kohlenwasserstoff anreichern kann, würde dies zu einer stärkeren Beladung des AKF führen. Deshalb wird auch bei Tanksystemen in den USA ein kleiner Teil der Gase über eine den Tank mit dem Einfüllstutzen verbindende Leitung rückgeführt ("Rezirkulation").

Bei Hybridfahrzeuge, die neben einem Verbrennungsmotor und dazugehörigem Kraftstoffsystem auch einen elektrischen Antrieb aufweisen und die in der Lage sind, gewisse Strecken rein elektrisch zu fahren, ergibt sich das Problem, dass der Verbrennungsmotor während des elektrischen Fahrbetriebs nicht für die Regeneration des AKF genutzt werden kann. Um die Beladung des AKF mit Kohlenwasserstoffen zu begrenzen wird daher bei Tanksystemen in Hybridfahrzeugen die Tankentlüftung zum AKF mit einem Ventil (**"FTIV** = **F**uel **T**ank **I**solation **V**alve") verschlossen. Die Ausgasung des Kraftstoffs führt dadurch zu einem Druckaufbau im Kraftstofftank, wobei ab einem gewissen Druck und einer bestimmten Temperatur keine weitere Ausgasung mehr stattfindet und sich ein Gleichgewicht einstellt.

Eine weitere wesentliche Aufgabe der Ventile in einem Tanksystem besteht darin, die Füllmenge an Kraftstoff in dem Kraftstofftank zu begrenzen. Der Tankvorgang an einer Zapfsäule endet dann, wenn der Kraftstoff im Einfüllrohr ansteigt und dadurch die Zapfpistole abschaltet. Um den Kraftstoff im Einfüllrohr ansteigen zu lassen, wird die Entlüftungsleitung im Tank bei einer bestimmten Füllhöhe durch ein schwimmergesteuertes Ventil, ein sogenanntes Füllstandsbegrenzungsventil ("**F**ill **L**imit **V**ent **V**alve, **FLVV")** verschlossen. Anschließend steigt der Druck im Tank an, wodurch kein weiterer Kraftstoff mehr in den Tank eingefüllt werden kann.

Auch im Falle eines Unfalls mit Überschlag muss sichergestellt sein, dass kein Kraftstoff aus dem Kraftstofftank des Fahrzeuges entweichen kann ("Roll-Over-Schutz"). Hierzu ist zwischen dem Tank und dem AKF ein weiteres Ventil, ein sogenanntes Überschlagventil ("**R**oll **O**ver **V**entil, **ROV**") vorgesehen, welches verhindert, dass bei einem Fahrzeug-Überschlag Kraftstoff in den AKF läuft und damit über die Frischluftöffnung in die Umwelt austritt.

Alle der vorstehend genannten Funktionen benötigen heute gesonderte Bauteile, die um den Kraftstofftank positioniert werden bzw. sich im Kraftstofftank befinden und untereinander verbunden werden müssen. Durch die Vielzahl an Verbindungen und einzelnen Bauteilen besteht eine hohe Komplexität und der benötigte Bauraum ist entsprechend groß. Da im Fahrzeug nicht mehr Platz zur Verfügung steht, geht dies auf Kosten des Tankvolumens. Des Weiteren werden bisher mechanische Ventile eingesetzt, die nicht in der Lage sind, sich auf veränderte Situationen einzustellen WO 2017/090029 offenbart ein Ventilsystem für einen Kraftstofftank mit einem Gehäuse mit einem Einlass zum Verbinden eines Ventils mit dem Kraftstofftank und einem Auslass zum Verbinden mit einem Aktivkohlefilter.

Es ist daher Aufgabe der Erfindung, ein System vorzuschlagen, welches die für einen Kraftstofftank erforderlichen Funktionen gewährleistet, aber hinsichtlich der genannten Nachteile verbessert ist.

Die Aufgabe wird gelöst durch ein Ventilsystem für einen Kraftstofftank mit den Merkmalen gemäß Anspruch 1. Insbesondere handelt es sich hierbei um ein Ventilsystem zur kontrollierten und/oder gesteuerten und/oder geregelten Ausbringung oder Einbringung eines Fluids, vorzugsweise Gas oder Luft oder mit kohlenwasserstoffhaltigen Kraftstoffdämpfen bzw. mit Kohlenwasserstoffen angereicherte oder gesättigte Luft, aus einem oder in einen Kraftstofftank.

Das erfindungsgemäße Ventilsystem umfasst ein Gehäuse mit einem Tankanschluss zum Verbinden des Ventilsystems mit einem Kraftstofftank. Ferner umfasst das Gehäuse einen Filteranschluss zum Verbinden des Ventilsystems mit einem Aktivkohlefilter und einen Einfüllrohranschluss zum Verbinden des Ventilsystems mit einem Einfüllrohr des Kraftstofftanks. Sowohl der Tankanschluss als auch der Filteranschluss und/oder der Einfüllrohranschluss können dabei jeweils in Form eines Anschlussstutzens ausgebildet sein, der jeweils unmittelbar oder mittelbar über eine zu dem Kraftstofftank, dem Aktivkohlefilter oder dem Einfüllrohr führende Verbindungsleitung mit dem Kraftstofftank, dem Aktivkohlefilter oder dem Einfüllrohr verbunden ist.

Entweder der Tankanschluss und der Filteranschluss oder der Tankanschluss und der Einfüllrohranschluss sind dabei über einen Hauptentlüftungskanal fluidisch miteinander verbunden oder verbindbar. In dem Hauptentlüftungskanal ist zumindest ein Hauptentlüftungsventil mit einem Ventilelement angeordnet, welches den Hauptentlüftungskanal in einer Schließstellung verschließt, sodass kein Fluid von dem Tankanschluss durch den Hauptentlüftungskanal zu dem Filteranschluss oder dem Einfüllrohranschluss strömen kann. In einer Freigabestellung gibt das Ventilelement den Hauptentlüftungskanal frei, sodass ein Fluid vom Tankanschluss durch den Hauptentlüftungskanal zu dem Filteranschluss oder dem Einfüllrohranschluss, also aus dem Kraftstofftank zu dem Aktivkohlefilter oder zu dem Einfüllrohr strömen kann.

Das Fluid ist vorliegend insbesondere ein Gas bzw. mit Kohlenwasserstoffen angereicherte oder gesättigte Luft, die beispielsweise beim Betankungsvorgang aus dem Kraftstofftank verdrängt wird.

Der Tankanschluss oder ein tankseitiger Hauptentlüftungskanal einerseits und der Filteranschluss oder ein filterseitiger Hauptentlüftungskanal andererseits sind ferner über einen Nebenentlüftungskanal fluidisch miteinander verbunden oder verbindbar. Alternativ oder additiv sind der Tankanschluss oder der tankseitige Hauptentlüftungskanal einerseits und der Einfüllrohranschluss oder ein einfüllrohrseitiger Hauptentlüftungskanal bzw. einfüllrohrseitiger Hauptverbindungskanal andererseits über einen oder den Nebenentlüftungskanal fluidisch miteinander verbunden oder verbindbar. Somit kann der Nebenentlüftungskanal einen fluidischen Bypass zum Hauptentlüftungsventil bilden. In dem Nebenentlüftungskanal ist zumindest eine Ventilgruppe mit zumindest einem Nebenentlüftungsventil angeordnet, welches den Nebenentlüftungskanal in einer Schließstellung schließt, sodass kein Fluid von dem Tankanschluss oder dem tankseitigen Hauptentlüftungskanal durch den Nebenentlüftungskanal zu dem Filteranschluss oder dem filterseitigen Hauptentlüftungskanal und/oder von dem Tankanschluss oder dem tankseitigen Hauptentlüftungskanal durch den Nebenentlüftungskanal zu dem Einfüllrohranschluss oder dem einfüllrohrseitigen Hauptentlüftungskanal strömen kann. In einer Freigabestellung gibt das Ventilelement des Nebenentlüftungsventils den Nebenentlüftungskanal frei, sodass ein Fluid von dem Tankanschluss oder dem tankseitigen Hauptentlüftungskanal durch den Nebenentlüftungskanal zu dem Filteranschluss oder dem filterseitigen Hauptentlüftungskanal und/oder von dem Tankanschluss oder dem tankseitigen Hauptentlüftungskanal durch den Nebenentlüftungskanal zu dem Einfüllrohranschluss oder dem einfüllrohrseitigen Hauptentlüftungskanal strömen kann.

Unter der Formulierung "tankseitiger" Hauptentlüftungskanal ist vorliegend der Abschnitt des Hauptentlüftungskanals zwischen dem Kraftstofftank bzw. dem Tankanschluss und dem Hauptentlüftungsventil bzw. dessen Ventilelement zu verstehen. Entsprechend ist unter "filterseitiger" Hauptentlüftungskanal vorliegend der Abschnitt des Hauptentlüftungskanals zwischen dem Hauptentlüftungsventil bzw. dessen Ventilelement und dem Filteranschluss bzw. dem Aktivkohlefilter, unter "einfüllrohrseitiger" Hauptentlüftungskanal der Abschnitt des Hauptentlüftungskanals zwischen dem Hauptentlüftungsventil bzw. dessen Ventilelement und dem Einfüllrohranschluss bzw. dem Einfüllrohr zu verstehen. Die Idee der Erfindung besteht also darin, das oder die Ventile, welche zwischen Kraftstofftank und Aktivkohlefilter angeordnet sind, und/oder das oder die Ventile, welche zwischen Kraftstofftank und Einfüllrohr angeordnet sind, in einer zentralen Ventileinheit zu integrieren. Dadurch wird eine Reduzierung der einzelnen Bauteile erreicht. In Abhängigkeit davon, welcher "Entlüftungsweg" bevorzugt ist, führt dabei der Hauptentlüftungskanal von dem Kraftstofftank zu dem Aktivkohlefilter oder dem Einfüllrohr und der Nebenentlüftungskanal vom Kraftstofftank lediglich zu der gleichen oder der anderen Komponente oder sowohl zu dem Aktivkohlefilter als auch zu dem Einfüllrohr. Ist im Hauptentlüftungskanal eine der Komponenten (Aktivkohlefilter bzw. Einfüllrohr) angeordnet und führt der Nebenentlüftungskanal auch zu der anderen Komponente, so wird über den Nebenentlüftungskanal eine ergänzende Entlüftung auch über die nicht über den Hauptentlüftungskanal angeschlossene Komponente ermöglicht.

Das Ventilelement des Hauptentlüftungsventils und das Ventilelement des Nebenentlüftungsventils sind vorzugsweise unabhängig voneinander betätigbar, sodass der Hauptentlüftungskanal und der Nebenentlüftungskanal unabhängig voneinander freigegeben oder verschlossen werden können, insbesondere die Entlüftung zu dem Aktivkohlefilter und dem Einfüllrohr also unabhängig voneinander gesteuert werden können.

Das zumindest eine Nebenentlüftungsventil ist beispielsweise ein Ventil mit einem von einem SMA-Element (SMA: Shape Memory Alloy - Formgedächtnislegierung) betätigbaren Ventilelement. Die grundsätzliche Funktionsweise solcher SMA-Ventile ist bekannt. Im Wesentlichen wird das SMA-Element, ein aus einer Formgedächtnislegierung gebildeter Draht oder gebildetes Band, der bzw. das sich oberhalb einer Umwandlungstemperatur, bei der sich die Struktur von einem martensitischen Gefüge in ein austenitisches Gefüge umwandelt, mit Strom beaufschlagt, sodass sich dieser bzw. dieses erwärmt und verkürzt. Das SMA-Element steht dabei mit dem Ventilelement derart in Kontakt, dass das SMA-Element bei dessen Verkürzung eine Kraft auf das Ventilelement ausübt und dieses betätigt, wodurch eine Ventilöffnung freigegeben oder geschlossen wird.

Bei dem Nebenentlüftungsventil kann es sich beispielsweise auch um ein an sich bekanntes Magnetventil handeln.

Ferner kann es sich bei dem Nebenentlüftungsventil auch um ein Ventil mit einem dielektrischen Elastomer-Aktuator (DEA) handeln. DEA bestehen beispielsweise aus mehreren Polyurethanschichten, zwischen denen Graphitschichten als Elektroden angeordnet sind. Wird elektrische Spannung an die Elektroden angelegt, so dass benachbarte Elektroden unterschiedlich gepolt sind, so ziehen sich die Elektroden an und bewegen sich aufgrund der Flexibilität der Polyurethanschicht (Elastomer) aufeinander zu. Dadurch verkürzt sich der gesamte Aktuator und das Ventil öffnet sich.

Das Ventilelement des in dem Hauptentlüftungskanal angeordneten Hauptentlüftungsventils ist oder umfasst bei einer bevorzugten Ausgestaltung eine Ventilmembran mit einer Druckseite und einer Strömungsseite, wobei an der Druckseite der Ventilmembran ein Druckraum des Hauptentlüftungsventils vorgesehen ist, und wobei die Strömungsseite der Ventilmembran in der Schließstellung des Ventilelements den Hauptentlüftungskanal verschließt und in der Freigabestellung des Ventilelements den Hauptentlüftungskanal freigibt.

Vorzugsweise ist im Druckraum an der Druckseite der Ventilmembran ein Vorspannelement vorgesehen, von dem eine Kraft auf die Druckseite der Ventilmembran ausgeht. Insbesondere wird dadurch das Ventilelement, konkret die Ventilmembran, in seiner Schließstellung vorgespannt, für ein Überführen in die Freigabestellung muss zumindest die von dem Vorspannelement ausgehende Kraft überwunden werden, beispielsweise durch entsprechende Druckverhältnisse an der Druckseite und der Strömungsseite der Ventilmembran. Das Vorspannelement selbst ist beispielsweise mittels an der Ventilmembran oder dem Gehäuse angeordneten Führungsmitteln geführt.

Der Druckraum des Hauptentlüftungsventils ist vorzugsweise über eine erste Öffnung fluidisch mit dem Tankanschluss und/oder über eine zweite Öffnung fluidisch mit dem Filteranschluss und/oder dem Einfüllrohranschluss verbunden. In der ersten Öffnung kann ein erstes Rückschlagventil angeordnet sein, welches eine Fluidströmung vom Tankanschluss in den Druckraum erlaubt und in Gegenrichtung verhindert. In der zweiten Öffnung kann ein zweites Rückschlagventil angeordnet sein, welches eine Fluidströmung von dem Filteranschluss und/oder dem Einfüllrohranschluss in den Druckraum erlaubt und in Gegenrichtung verhindert. Bei Überdruck im Kraftstofftank im Vergleich zum Atmosphärendruck herrscht somit im Druckraum des Hauptentlüftungsventils und damit auf der Druckseite der Ventilmembran ebenfalls dieser Überdruck. Bei Unterdruck im Kraftstofftank im Vergleich zum Atmosphärendruck hingegen herrscht im Druckraum des Hauptentlüftungsventils und damit auf der Druckseite der Ventilmembran nicht dieser Unterdruck, sondern der Atmosphärendruck. Sofern sichergestellt ist, dass im ersten Fall auf der Strömungsseite maximal der genannte Überdruck und im zweiten Fall maximal der Atmosphärendruck anliegt, wird die Ventilmembran und damit das Ventilelement in beiden Fällen aufgrund der Druckverhältnisse und/oder der Vorspannung durch das Vorspannelement in seiner Schließstellung gehalten, das heißt das Hauptentlüftungsventil ist geschlossen. Für ein Überführen in die Freigabestellung und damit ein Öffnen des Hauptentlüftungsventils ist eine Druckreduzierung im Druckraum erforderlich.

Bei einer bevorzugten Ausführungsform umfasst das Hauptentlüftungsventil zumindest ein erstes Vorsteuerventil, welches einerseits mit dem Druckraum des Hauptentlüftungsventils und andererseits mit dem filterseitigen oder einfüllrohrseitigen Hauptentlüftungskanal und/oder einem filterseitigen oder einfüllrohrseitigen Nebenentlüftungskanal fluidisch verbunden oder verbindbar ist. Das erste Vorsteuerventil dient dazu, bei Überdruck im Kraftstofftank im Vergleich zum Atmosphärendruck den hieraus resultierenden Überdruck im Druckraum des Hauptentlüftungsventiles durch Öffnen der fluidischen Verbindung zum filterseitigen oder einfüllrohrseitigen Haupt- oder Nebenentlüftungskanal und damit zum Atmosphärendruck soweit zu reduzieren, dass das die Ventilmembran und damit das Ventilelement des Hauptentlüftungsventils in seine Freigabestellung übergeht und damit das Hauptentlüftungsventil geöffnet wird und das Fluid von dem tankseitigen Hauptentlüftungskanal zu dem filterseitigen oder einfüllrohrseitigen Hauptentlüftungskanal strömen kann.

Vorzugsweise ist der maximale Strömungsdurchmesser der ersten Öffnung kleiner als der maximale Strömungsdurchmesser des ersten Vorsteuerventils. Dadurch wird sichergestellt, dass bei Öffnung des ersten Vorsteuerventils mehr Fluid durch das erste Vorsteuerventil aus dem Druckraum austritt als durch die erste Öffnung in den Druckraum eintritt, sodass der Druck im Druckraum reduziert wird.

Unter maximalem Strömungsdurchmesser wird vorstehend und nachfolgend der für die Fluidströmung zur Verfügung stehende maximale Querschnitt verstanden, das heißt der im Falle einer maximalen Offenstellung gegebenenfalls in der jeweiligen Öffnung vorgesehener Ventile für die Fluidströmung zur Verfügung stehende Querschnitt. Ein kleinerer Strömungsdurchmesser bedeutet, dass bei gleichen Druckverhältnissen pro Zeiteinheit weniger Fluid durch diese Öffnung strömen kann als durch die Öffnung mit dem im Vergleich hierzu größeren Strömungsdurchmesser.

Bei einer bevorzugten Ausführungsform umfasst das Hauptentlüftungsventil zumindest ein zweites Vorsteuerventil, welches einerseits mit dem Druckraum des Hauptentlüftungsventils und andererseits mit dem tankseitigen Hauptentlüftungskanal und/oder einem tankseitigen Nebenentlüftungskanal fluidisch verbunden oder verbindbar ist. Das zweite Vorsteuerventil dient dazu, bei Unterdruck im Kraftstofftank im Vergleich zum Atmosphärendruck den dann im Druckraum des Hauptentlüftungsventiles herrschenden Atmosphärendruck durch Öffnen der fluidischen Verbindung zum tankseitigen Haupt- oder Nebenentlüftungskanal und damit zum Unterdruck soweit zu reduzieren, dass das die Ventilmembran und damit das Ventilelement des Hauptentlüftungsventils in seine Freigabestellung übergeht und damit das Hauptentlüftungsventil geöffnet wird und Fluid, hier insbesondere Luft, von dem filterseitigen oder einfüllrohrseitigen Hauptentlüftungskanal zu dem tankseitigen Hauptentlüftungskanal strömen kann.

Vorzugsweise ist der maximale Strömungsdurchmesser der zweiten Öffnung kleiner als der maximale Strömungsdurchmesser des zweiten Vor-steuerventils. Dadurch wird sichergestellt, dass bei Öffnung des zweiten Vorsteuerventils mehr Fluid durch das zweite Vorsteuerventil aus dem Druckraum austritt als durch die zweite Öffnung in den Druckraum eintritt, sodass der Druck im Druckraum reduziert wird.

Bei einer bevorzugten Ausführungsform umfasst das Ventilsystem das erstes Vorsteuerventil und das zweites Vorsteuerventil. Diese beiden Vorsteuerventile ermöglichen eine umfassende Steuerung des Hauptentlüftungsventils sowohl bei Überdruck als auch bei Unterdruck im Kraftstofftank, insbesondere in Verbindung mit den vorstehend genannten Öffnungen im Druckraum und den in diesen angeordneten Rückschlagventilen.

Unter der Formulierung "tankseitiger" Nebenentlüftungskanal ist vorliegend der Abschnitt des Nebenentlüftungskanals zwischen dem Kraftstofftank bzw. dem Tankanschluss und dem Nebenentlüftungsventil bzw. dessen Ventilelement zu verstehen. Entsprechend ist unter "filterseitiger" Nebenentlüftungskanal vorliegend der Abschnitt des Nebenentlüftungskanals zwischen dem Nebenentlüftungsventil bzw. dessen Ventilelement und dem Filteranschluss bzw. dem Aktivkohlefilter, unter "einfüllrohrseitiger" Nebenentlüftungskanal der Abschnitt des Nebenentlüftungskanals zwischen dem Nebenentlüftungsventil bzw. dessen Ventilelement und dem Einfüllrohranschluss bzw. dem Einfüllrohr zu verstehen. Unter den Formulierungen "einerseits" und "andererseits" in Bezug auf Ventile werden vorstehend und nachfolgend zwei fluidisch einander gegenüberliegende Seiten eines Ventilelements des jeweiligen Ventils verstanden. Bei geöffnetem Ventil erfolgt somit bei entsprechenden Druckverhältnissen eine Fluidströmung durch das Ventil, von der einen zur anderen Seite. Bei geschlossenem Ventil erfolgt keine derartige Fluidströmung.

Das erste Vorsteuerventil und/oder das zweite Vorsteuerventil umfassen wiederum beispielsweise ein von einem SMA-Element betätigbares Ventilelement, sodass eine gezielte Steuerung des ersten bzw. zweiten Vorsteuerventiles durch Beaufschlagung des SMA-Elementes mit Strom erfolgen kann. Es kann sich bei dem erstem und/oder zweitem Vorsteuerventil aber beispielsweise auch um ein Magnetventil oder auch um ein Ventil mit einem dielektrischen Elastomer-Aktuator (DEA) handeln.

Eine Weiterbildung der Erfindung sieht vor, dass der Tankanschluss oder der tankseitige Hauptentlüftungskanal sowie der Filteranschluss oder der filterseitiger Hauptentlüftungskanal und der Einfüllrohranschluss oder der einfüllrohrseitiger Hautverbindungskanal fluidisch über den Nebenentlüftungskanal miteinander verbunden oder verbindbar sind, wobei in dem Nebenentlüftungskanal mindestens zwei Ventilgruppen angeordnet sind, und zwar mindestens eine Filter-Ventilgruppe mit zumindest einem Filter-Nebenentlüftungsventil und mindestens eine Einfüllrohr-Ventilgruppe mit zumindest einem Einfüllrohr-Nebenentlüftungsventil. Das oder die Filter-Nebenentlüftungsventile der Filter-Ventilgruppe sind einerseits mit einem oder dem tankseitigen Nebenentlüftungskanal und andererseits mit einem oder dem filterseitigen Nebenentlüftungskanal fluidisch verbunden oder verbindbar. Das oder die Einfüllrohr-Nebenentlüftungsventile der Einfüllrohr-Ventilgruppe sind einerseits mit dem tankseitigen Nebenentlüftungskanal und andererseits mit einem oder dem einfüllrohrseitigen Nebenentlüftungskanal fluidisch verbunden oder verbindbar.

Über den Nebenentlüftungskanal kann in diesem Fall sowohl eine Entlüftung des Kraftstofftanks durch Entweichen des Fluides über den Aktivkohlefilter als auch durch Entweichen des Fluides in das Einfüllrohr erfolgen, ohne das Hauptentlüftungsventil zwingend öffnen zu müssen, beispielsweise indem das zumindest eine Filter-Nebenentlüftungsventil der Filter-Ventilgruppe und/oder das zumindest eine Einfüllrohr-Nebenentlüftungs-Ventil der Einfüllrohr-Ventilgruppe unabhängig voneinander geöffnet bzw. geschlossen werden. Auch die Kombination einer Entlüftung über den Hauptentlüftungskanal mit einer oder beiden Entlüftungswegen des Nebenentlüftungskanals ist möglich. Auf diese Weise lässt sich auch die Stärke bzw. Geschwindigkeit des Fluids beim Entlüften variieren.

Vorzugsweise weist die Filter-Ventilgruppe zwei oder drei oder vier oder mehrere Filter-Nebenentlüftungsventile und/oder die Einfüllrohr-Ventilgruppe zwei oder drei oder vier oder mehrere Einfüllrohr-Nebenentlüftungsventile auf. Insbesondere handelt es sich bei den Filter-Nebenentlüftungsventilen und/oder den Einfüllrohr-Nebenentlüftungsventilen um Ventile mit einem von einem SMA-Element betätigbaren Ventilelement oder um Magnetventile oder auch um Ventile mit einem dielektrischen Elastomer-Aktuator (DEA). Dies eröffnet vielfältige Kombinationsmöglichkeiten der verschiedenen Entlüftungswege und eine mehrstufige Einstellmöglichkeit hinsichtlich der Stärke bzw. Geschwindigkeit des Fluids beim Entlüften. Mit dem Hauptentlüftungsventil, welches insbesondere aufgrund der Ventilmembran einen vergleichsweise großen Strömungsquerschnitt erlaubt, und den mehreren Nebenentlüftungsventilen mit vergleichsweise kleinem Strömungsquerschnitt der Filter-Ventilgruppe und der Einfüllrohr-Ventilgruppe ist es möglich, einen Volumenstrom des Fluides zu regulieren. Je nach Anzahl der Nebenentlüftungsventile kann dadurch eine Einstellung bzw. Regelung in Stufen für die Stärke der Entlüftung über den Aktivkohlefilter und/oder über das Einfüllrohr erfolgen.

In einer konstruktiv vorteilhaften Ausführungsform bildet der tankseitige Nebenentlüftungskanal eine gemeinsame erste Ventilkammer sowohl für alle Filter-Nebenentlüftungsventile als auch für alle Einfüllrohr-Nebenentlüftungsventile, vorzugsweise auch noch für das zweite Vorsteuerventil. Weiter kann vorgesehen sein, dass der filterseitige Nebenentlüftungskanal eine gemeinsame zweite Ventilkammer für alle Filter-Nebenentlüftungsventile bildet. Auch kann vorgesehen sein, dass der einfüllrohrseitige Nebenentlüftungskanal eine gemeinsame dritte Ventilkammer für alle Einfüllrohr-Nebenentlüftungsventile bildet, wobei zweite und dritte Ventilkammer durch eine Trennwand fluidisch voneinander getrennt sind.

Eine Weiterbildung der Erfindung sieht vor, dass das Ventilsystem ein Sicherheitsventil, insbesondere für Über- und/oder Unterdruck aufweist, welches fluidisch mit dem tankseitigen Haupt- und/oder Nebenentlüftungskanal verbunden ist. Zudem kann das Sicherheitsventil fluidisch mit dem filterseitigen Haupt- und/oder Nebenentlüftungskanal verbunden sein. Eine solche fluidische Verbindung kann jeweils entweder unmittelbar oder mittelbar, also beispielsweise über einen Zwischenkanal oder eine Zwischenkammer erfolgen. Vorzugsweise ist das Gehäuse des Sicherheitsventils einstückig mit dem Gehäuse des Ventilsystems ausgebildet. Dadurch wird verhindert, dass der Druck im Kraftstofftank gewisse Grenzwerte, sowohl hinsichtlich Überdruck als auch hinsichtlich Unterdruck, nicht überschreitet, insbesondere dann, wenn das Ventilsystem nicht betrieben wird.

Die Nebenentlüftungsventile und/oder die Vorsteuerventile und/oder alle weiteren Ventile, die ein von einem SMA-Element betätigbares Ventilelement oder ein Ventil mit einem dielektrischen Elastomer-Aktuator (DEA) aufweisen oder ein Magnetventil sind, sind vorzugsweise auf einer gemeinsamen Leiterplatte angeordnet, um die Anzahl der erforderlichen Bauteile zu reduzieren. Um beispielsweise die SMA-Elemente mit Strom beaufschlagen um damit das Ventil öffnen zu können, sind die SMA-Elemente, genauer dessen Enden elektrisch mit der Leiterplatte verbunden. Insbesondere ist die Leiterplatte auch mit einer Steuer- und Auswerteeinheit des Kraftfahrzeuges verbunden, sodass sich das Ventilsystem zur Entlüftung des Kraftstofftanks durch die Steuer- und Auswerteeinheit des Kraftfahrzeuges steuern lässt, wobei in vorteilhafter Weise an anderen Stellen des Fahrzeuges ermittelte Messwerte berücksichtigt werden, z.B. eine zu erwartende Querbeschleunigung im Tank oder eine Rückmeldung des AKF-Regenerationsmanagements dahingehend, ob zum jetzigen Zeitpunkt eine Regeneration des Aktivkohlefilters mit dem Verbrennungsmotor erfolgen kann. Dadurch ist das Ventilsystem ein elektronisch gesteuertes Ventilsystem für den Kraftstofftank eines Kraftfahrzeuges.

Bei einer vorteilhaften Weiterbildung ist ferner vorgesehen, dass auf der Leiterplatte mehrere Sensoren, insbesondere Drucksensoren und/oder Temperatursensoren und/oder Lagesensoren und/oder Beschleunigungssensoren und/oder Sensoren zur Ermittlung der Gaszusammensetzung und damit der Qualität des Kraftstoffs, angeordnet bzw. integriert sind bzw. die Leiterplatte trägt die zur Erfassung des Druckes, der Temperatur, der Lage und/oder der Beschleunigung und/oder der Gaszusammensetzung erforderliche elektronische Schaltung. Dadurch lassen sich Zustände innerhalb des Kraftstofftanks genauer ermitteln, sodass beispielsweise eine Regelung der Abschalthöhe und/oder eine Auswertung des Druckes im Kraftstofftank und/oder im Einfüllrohr ermöglich ist. Durch eine Verbindung der Leiterplatte mit der Steuer- und Auswerteeinheit des Kraftfahrzeuges lassen sich die einzelnen Messwerte an die Steuer- und Auswerteeinheit weitergegeben und bei der Steuerung des Ventilsystems zur Entlüftung des Kraftstofftanks durch die Steuer- und Auswerteeinheit des Kraftfahrzeuges berücksichtigen.

Ferner ist es von Vorteil, wenn das Ventilsystem einen Kraftstoff-Abscheider und/oder ein Überschlagventil umfasst, wobei das Überschlagventil insbesondere in dem Kraftstoff-Abscheider integriert ist, und wobei der Kraftstoff-Abscheider und/oder das Überschlagventil vorzugsweise zwischen dem Tankanschluss und dem Kraftstofftank oder in der tankseitigen Hauptentlüftungsleitung integriert sind. Dadurch werden weitere für einen Kraftstofftank erforderliche Funktionen in dem Ventilsystem integriert.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen jeweils:
- FIG 1: ein Tanksystem eines Kraftfahrzeuges mit einem Ventilsystem in einer vereinfachten Prinzipskizze,
- FIG 2: ein Ventilsystem gemäß einer ersten Ausführungsform in einer perspektivischen Draufsicht,
- FIG 3: einen Längsschnitt des Ventilsystems gemäß der ersten Ausführungsform in einer perspektivischen Darstellung entlang Linie A-A gemäß Fig. 2,
- FIG 4: einen Längsschnitt des Ventilsystems gemäß der ersten Ausführungsform in einer perspektivischen Darstellung entlang Linie B-B gemäß Fig. 2,
- FIG 5: eine Ventilgruppe des Ventilsystems gemäß der ersten Ausführungsform,
- FIG 6: ein Hauptentlüftungsventil des Ventilsystems gemäß der ersten Ausführungsform in einer schematischen Prinzipskizze,
- FIG 7: ein Hauptentlüftungsventil des Ventilsystems gemäß der ersten Ausführungsform in einer Schnittdarstellung entlang Linie C-C gemäß Fig. 2,
- FIG 8: ein Ventil des Ventilsystems gemäß der ersten Ausführungsform in einer Schnittdarstellung entlang Linie D-D gemäß Fig. 2,
- FIG 9: ein Ventilsystem gemäß einer zweiten Ausführungsform in einer Draufsicht,
- FIG 10: einen Längsschnitt des Ventilsystems gemäß der zweiten Ausführungsform in einer perspektivischen Darstellung entlang Linie A-A gemäß Fig. 9,
- FIG 11: einen Längsschnitt des Ventilsystems gemäß der zweiten Ausführungsform in einer perspektivischen Darstellung entlang Linie B-B gemäß Fig. 9,
- FIG 12: eine Ventilgruppe des Ventilsystems gemäß der zweiten Ausführungsform,
- FIG 13: ein Hauptentlüftungsventil des Ventilsystems gemäß der zweiten Ausführungsform in einer schematischen Prinzipskizze,
- FIG 14: ein Hauptentlüftungsventil des Ventilsystems gemäß der zweiten Ausführungsform in einer Schnittdarstellung entlang Linie C-C gemäß Fig. 9,
- FIG 15: ein Ventil des Ventilsystems gemäß der zweiten Ausführungsform in einer Schnittdarstellung entlang Linie D-D gemäß Fig. 9,
- FIG 16: einen Längsschnitt des Ventilsystems gemäß der zweiten Ausführungsform entlang Linie E-E gemäß Fig. 9.

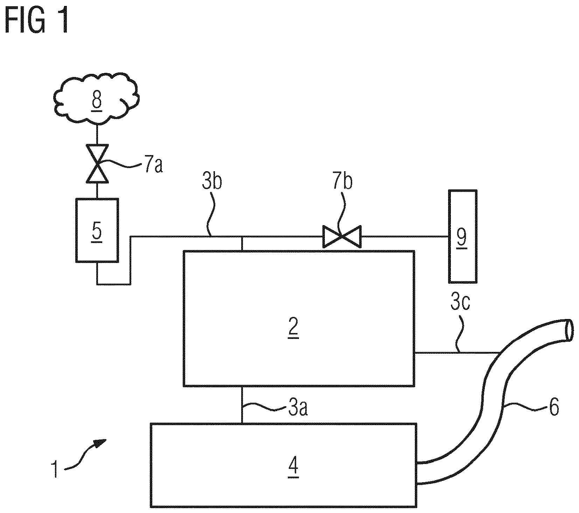

Fig. 1 zeigt ein Tanksystem 1 eines Kraftfahrzeuges mit einem Ventilsystem 2. Das Ventilsystem 2 wird über eine erste Entlüftungsleitung 3a mit einem Kraftstofftank 4 verbunden oder teilweise in diesen eingesetzt, sodass ein Fluid, vorliegend Luft enthaltend Kohlenwasserstoffe, aus dem Kraftstofftank 4 in das Ventilsystem 2 entweichen kann. Über eine zweite Entlüftungsleitung 3b ist das Ventilsystem 2 mit einem Aktivkohlefilter 5 verbunden, in welchem die im durchgeleiteten Fluid enthaltenen Kohlenwasserstoffe zurückgehalten bzw. adsorbiert werden. Der Kraftstofftank 4 umfasst ferner ein Einfüllrohr 6, über welches beim Betankungsvorgang Kraftstoff in den Kraftstofftank 4 eingefüllt werden kann. Eine dritte Entlüftungsleitung 3c führt vom Ventilsystem 2 zu dem Einfüllrohr 6, um das bei Entlüftung des Kraftstofftanks 4 aus diesem entweichende Fluid in das Einfüllrohr 6 rückzuführen. Während des Betriebes des Fahrzeuges wird der Aktivkohlebehälter 5 regeneriert, indem ein Ventil 7a geöffnet wird, sodass Frischluft aus der Atmosphäre 8 durch den Aktivkohlefilter gesaugt wird und gemeinsam mit dem Fluid durch Öffnen eines Ventiles 7b einem Verbrennungsmotor 9 des Kraftfahrzeuges zugeführt wird.

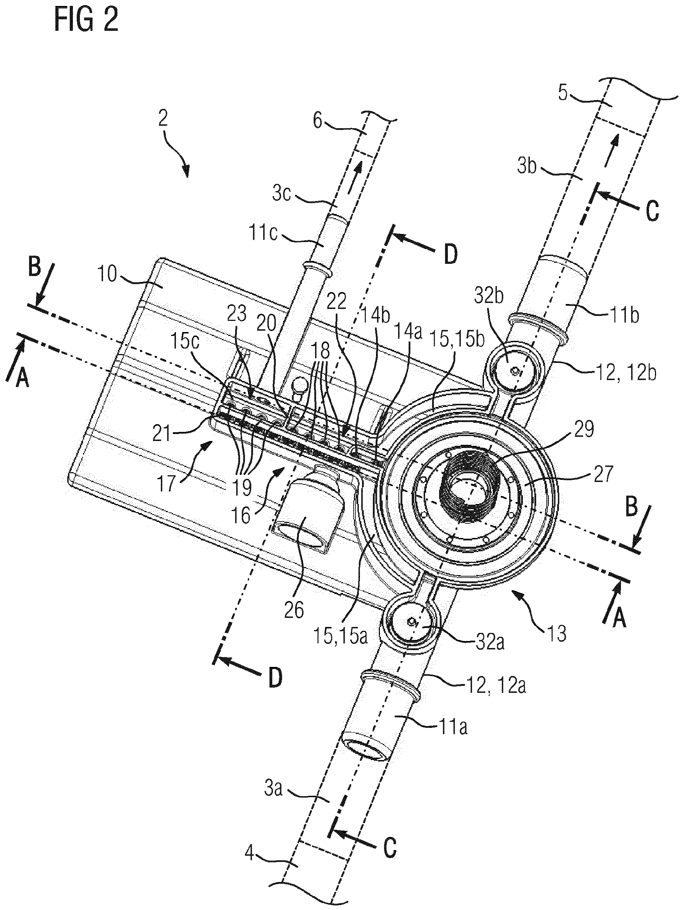

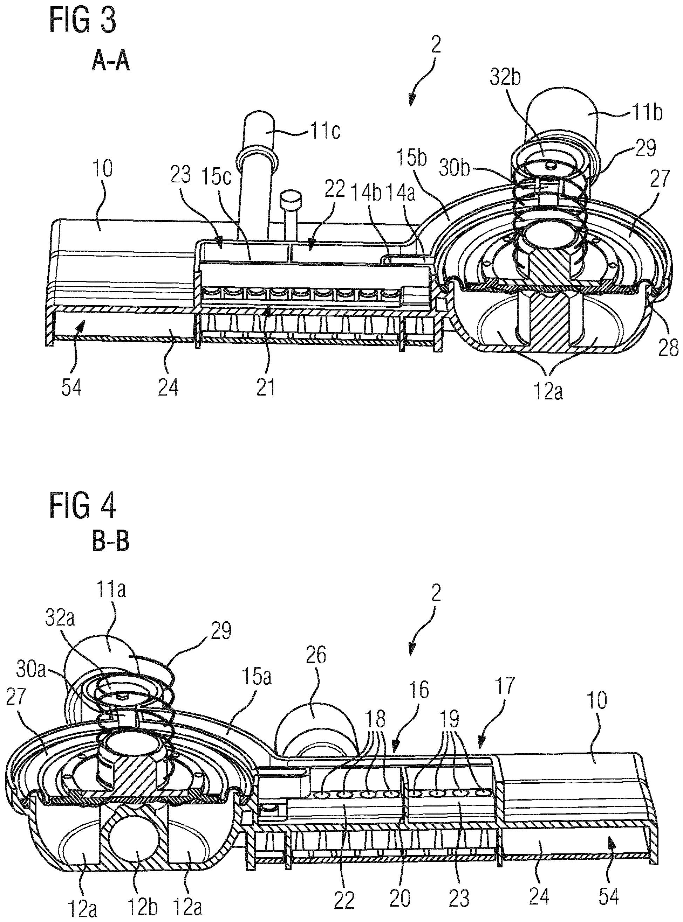

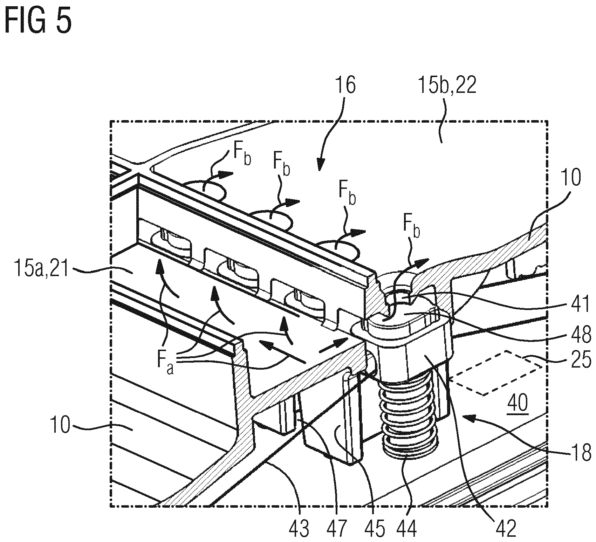

Fig. 2 zeigt das Ventilsystem 2 gemäß einer ersten Ausführungsform für den Kraftstofftank 4 in einer perspektivischen Darstellung, Fig. 3 und Fig. 4 jeweils einen Längsschnitt durch das Ventilsystem 2 gemäß Fig. 2 und Fig. 5 einen Ausschnitt des Ventilsystems 2 in vergrößerter Darstellung. Der Kraftstofftank 4, der Aktivkohlefilter 5 und das Einfüllrohr 6 sowie die das Ventilsystem 2 gegebenenfalls damit verbindenden Entlüftungsleitungen 3a, 3b, 3c sind vorliegend gestrichelt angedeutet. Prinzipiell wäre es auch denkbar, das Ventilsystem 2 jeweils ohne Entlüftungsleitung direkt mit dem Kraftstofftank 4, dem Aktivkohlefilter 5 oder dem Einfüllrohr 6 zu verbinden bzw. das Ventilsystem 2 jeweils darin zu integrieren.

Das Ventilsystem 2 umfasst ein Gehäuse 10 mit einem Tankanschluss 11a zum Verbinden des Ventilsystems 2 mit dem Kraftstofftank 4 bzw. mit der zum Kraftstofftank 4 führenden Entlüftungsleitung 3a. Ferner umfasst das Gehäuse 10 einen Filteranschluss 11b zum Verbinden des Ventilsystems 2 mit dem Aktivkohlefilter 5 bzw. der zum Aktivkohlefilter 5 führenden Entlüftungsleitung 3b sowie einen Einfüllrohranschluss 11c zum Verbinden des Ventilsystems 2 mit dem Einfüllrohr 6 des Kraftstofftanks 4 bzw. der zum Einfüllrohr 6 führenden Entlüftungsleitung 3c. Oberseitig ist das Gehäuse 10 im Montagezustand von einem - nicht dargestellten - Gehäusedeckel, unterseitig von einem - ebenfalls nicht dargestellten - Gehäuseboden verschließbar, sodass es gegenüber der Umgebung pneumatisch abgedichtet ist.

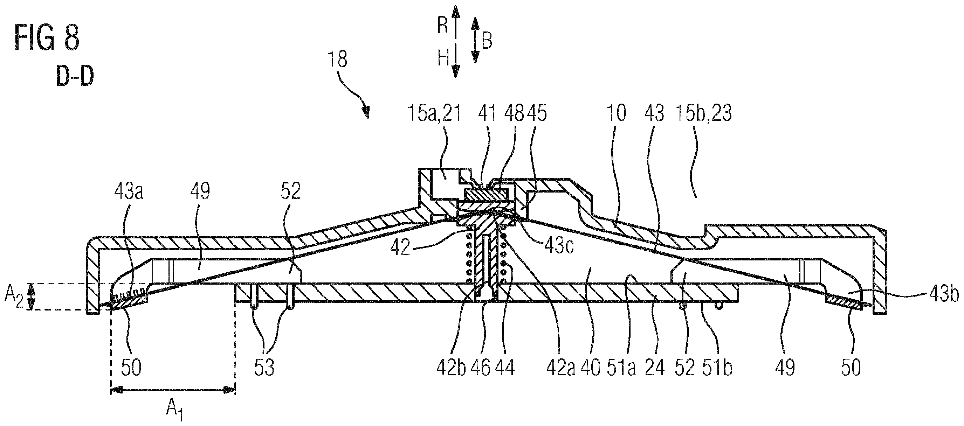

In dem dargestellten Ausführungsbeispiel sind der Tankanschluss 11a und der Filteranschluss 11b über einen Hauptentlüftungskanal 12 fluidisch miteinander verbunden bzw. verbindbar. Ebenso wäre es möglich, dass der Hauptentlüftungskanal 12 den Tankanschluss 11a und den Einfüllrohranschluss 11c verbindet, was vorliegend nicht explizit dargestellt ist. In dem Hauptentlüftungskanal 12 ist ein Hauptentlüftungsventil 13 angeordnet, welches den Hauptentlüftungskanal 12 in einer Schließstellung verschließt und in einer Freigabestellung freigibt. Das Hauptentlüftungsventil 13 umfasst zudem zwei Vorsteuerventile, ein erstes Vorsteuerventil 14a und ein zweites Vorsteuerventil 14b, die als Ventile mit von einem SMA-Element betätigbaren Ventilelement ausgebildet sind (vgl. Fig. 8).

In dem gezeigten Ausführungsbeispiel sind zudem der Tankanschluss 11a, genauer ein tankseitiger Hauptentlüftungskanal 12a, mit dem Filteranschluss 11b, genauer einem filterseitigen Hauptentlüftungskanal 12b, sowie der Tankanschluss 11a, genauer der tankseitige Hauptentlüftungskanal 12a, mit dem Einfüllrohranschluss 11c über einen Nebenentlüftungskanal 15 fluidisch verbunden. Im Nebenentlüftungskanal 15 ist eine Filter-Ventilgruppe 16 und eine Einfüllrohr-Ventilgruppe 17 angeordnet, die vorliegend beispielhaft jeweils vier Nebenentlüftungsventile, und zwar vier Filter-Nebenentlüftungsventile 18 der Filter-Ventilgruppe 16 und vier Einfüllrohr-Nebenentlüftungsventile 19 der Einfüllrohr-Ventilgruppe 17, umfassen, die jeweils ein von einem SMA-Element betätigbares Ventilelement aufweisen (vgl. Fig. 8), welches den Nebenentlüftungskanal 15 zum Aktivkohlefilter 5 hin oder zum Einfüllrohr 6 hin schließt oder freigibt. In Fig. 5 ist ein Ausschnitt des Ventilsystems 2 dargestellt, welcher eine solche Ventilgruppe, vorliegend die Filter-Ventilgruppe 16 mit den Filter-Nebenentlüftungsventilen 18, zeigt.

Der Nebenentlüftungskanal 15 weist verschiedene Abschnitte bzw. Verzweigungen auf. Ein tankseitiger Nebenentlüftungskanal 15a führt von dem Tankanschluss 11a, genauer dem tankseitigen Hauptentlüftungskanal 12a, zu den Nebenentlüftungsventilen 18, 19 der Filter-Ventilgruppe 16 und der Einfüllrohr-Ventilgruppe 17, sodass Fluid bei der Entlüftung des Kraftstofftanks 4 zunächst zu den geöffneten Nebenentlüftungsventilen 18, 19 (dies ist in Fig. 5 veranschaulicht durch Pfeile Fₐ), dann durch diese hindurch und schließlich von diesen - wie in Fig. 5 durch die Pfeile F_{b} gezeigt - zu dem Aktivkohlefilter 5 oder auch zu dem Einfüllrohr 6 strömen kann. Mit anderen Worten: Die Filter-Ventilgruppe 16 bzw. deren Filter-Nebenentlüftungsventile 18 sowie die Einfüllrohr-Ventilgruppe 17 bzw. deren Einfüllrohr-Nebenentlüftungsventile 19 sind einerseits jeweils mit dem tankseitigen Nebenentlüftungskanal 15a verbunden. Auf der fluidisch anderen Seite der Nebenentlüftungsventile 18, 19, also auf einer dem Filteranschluss 11b bzw. dem Einfüllrohranschluss 11c fluidisch zugewandten Seite der Nebenentlüftungsventile 18, 19 der Ventilgruppen 16, 17, weist der Nebenentlüftungskanal 15 zwei durch eine Trennwand 20 voneinander getrennte Abschnitte auf, und zwar einen filterseitigen Nebenentlüftungskanal 15b sowie einen einfüllrohrseitigen Nebenentlüftungskanal 15c. Mit anderen Worten: Die Filter-Ventilgruppe 16 ist auf ihrer anderen Seite somit mit dem filterseitigen Nebenentlüftungskanal 15b, die Einfüllrohr-Ventilgruppe 17 ist auf ihrer anderen Seite somit mit dem einfüllrohseitigen Nebenentlüftungskanal 15c verbunden.

Der tankseitige Nebenentlüftungskanal 15a bildet im Bereich der Nebenentlüftungsventile 18, 19 bzw. der Ventilgruppen 16, 17 eine gemeinsame erste Ventilkammer 21 aus, durch die jedem der Nebenentlüftungsventile 18, 19 aus dem Kraftstofftank 4 entweichendes Fluid zugeführt werden kann. Der filterseitige Nebenentlüftungskanal 15b bildet eine zweite Ventilkammer 22 aus und der einfüllrohrseitige Nebenentlüftungskanal 15c bildet eine gemeinsame dritte Ventilkammer 23 aus. Die zweite Ventilkammer und die dritte Ventilkammer sind durch die Trennwand 20 fluidisch voneinander getrennt.

All vorstehend beschriebenen Kanäle 12, 12a, 12b, 15, 15a, 15b, 15c sind einstückig mit dem Gehäuse 10 des Ventilsystems 2 ausgebildet und durch entsprechende, an dem Gehäuse 10 ausgebildete Trennwände gebildet, wodurch die Anzahl der Bauteile des Ventilsystems 2 deutlich reduziert werden kann. Die Ventile (14a, 14b, 18, 19), die ein von einem SMA-Element betätigbares Ventilelement aufweisen, sind zudem auf einer gemeinsamen Leiterplatte 24 angeordnet. Auf der Leiterplatte 24 können ferner mehrere Sensoren 25 integriert sein, beispielsweise Drucksensoren und/oder Temperatursensoren und/oder Lagesensoren und/oder Beschleunigungssensoren und/oder Sensoren zur Ermittlung der Gaszusammensetzung und damit der Qualität des Kraftstoffs, um Messwerte innerhalb des Ventilsystems 2 zu erfassen, die dann beispielsweise zur Ansteuerung des Ventilsystems 2 bzw. einzelner Ventile herangezogen werden können. Ein solcher Sensor 25 ist in Fig. 5 beispielhaft gestrichelt angedeutet.

Das Ventilsystem 2 umfasst ferner ein Sicherheitsventil 26, vorliegend ein kombiniertes Sicherheitsventil sowohl für Überdruck als auch für Unterdruck, der sich möglicherweise innerhalb des Kraftstofftanks 4 aufbauen kann, insbesondere dann, wenn das Ventilsystem 2 selbst nicht betätigt wird. Hierfür ist das Sicherheitsventil 26 mit dem tankseitigen Nebenentlüftungskanal 15a verbunden. Das Gehäuse des Sicherheitsventils 26 ist einstückig mit dem Gehäuse 10 des Ventilsystems 2 ausgebildet, bzw. ein Teil des Gehäuses 10 des Ventilsystems 2.

Des Weiteren kann das Ventilsystem 2 einen Kraftstoff-Abscheider und ein Überschlagventil aufweisen, welches beispielsweise in dem Kraftstoff-Abscheider integriert ist. Sofern ein Kraftstoff-Abscheider und/oder ein Überschlagventil vorgesehen sind, ist dieses zwischen dem Tankanschluss 11a und dem Kraftstofftank 4 oder auch in der tankseitigen Hauptentlüftungsleitung 12a integriert. Aufbau und Funktion solcher Kraftstoff-Abscheider und/oder Überschlagventile sind dem Fachmann aus dem Stand der Technik bekannt, sodass hier aus Gründen der Übersichtlichkeit auf eine separate Darstellung verzichtet wird.

Das Hauptentlüftungsventil 13 umfasst als Ventilelement eine Ventilmembran 27, die vorliegend kreisförmig ausgebildet ist. In einem Randbereich weist die Ventilmembran 27 einen umlaufenden U-förmigen Abschnitt auf, der in einen ebenfalls kreisförmigen, von dem Gehäuse 10 des Ventilsystems 2 ausgebildeten U-förmigen Dichtsitz 28 eingreift. Die Ventilmembran weist eine Druckseite 27a und eine Strömungsseite 27b auf, wobei an der Druckseite 27a ein Druckraum 33 des Hauptentlüftungsventils 13 vorgesehen ist. Ein ringförmiger äußerer Teilbereich der Strömungsseite 27b grenzt an den tankseitigen Hauptentlüftungskanal 12a an, ein innerer Teilbereich der Strömungsseite 27b grenzt an den filterseitigen Hauptentlüftungskanal 12b an. Die Ventilmembran 27 und damit das Ventilelement des Hauptentlüftungsventils 13 sind zwischen einer Schließstellung und einer Freigabestellung bewegbar. In der Schließstellung verschließt die Strömungsseite 27b der Ventilmembran 27 den Hauptentlüftungskanal 12, indem die Ventilmembran 27 an einer Öffnung 31 des filterseitigen Hauptentlüftungskanals 12b anliegt und diese fluiddicht verschließt. In der Freigabestellung gibt die Strömungsseite 27b der Ventilmembran 27 den Hauptentlüftungskanal 12 frei, indem die Ventilmembran 27 von der Öffnung 31 des filterseitigen Hauptentlüftungskanals 12 abgehoben ist und somit Fluid in den oder aus dem filterseitigen Hauptentlüftungskanal 12b strömen kann. Im Druckraum 33 ist an der Druckseite 27a der Ventilmembran 27 ein Vorspannelement 29, vorliegend eine Schraubendruckfeder, vorgesehen, von dem Kraft auf die Druckseite 27a der Ventilmembran 27 ausgeht, die - sofern sie nicht durch andere Kräfte kompensiert wird - die Strömungsseite 27b der Ventilmembran 27 gegen die Öffnung 31 des filterseitigen Hauptentlüftungskanals 12b drückt und diesen und damit das Hauptentlüftungsventil 13 dadurch verschließt.

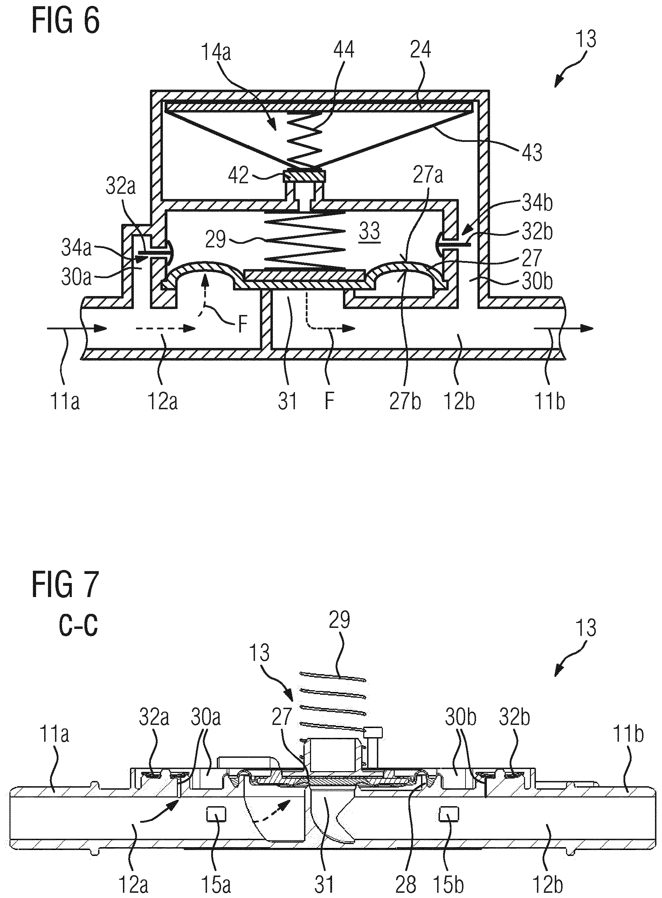

Der Druckraum 33 ist über eine erste Öffnung 34a fluidisch mit dem Tankanschluss 11a und über eine zweite Öffnung 34b fluidisch mit dem Filteranschluss 11b verbunden. In der ersten Öffnung 34a ist ein erstes Rückschlagventil 32a angeordnet, welches eine Fluidströmung vom Tankanschluss 11a in den Druckraum 33 erlaubt und in Gegenrichtung verhindert. In der zweiten Öffnung ist ein zweites Rückschlagventil 32b angeordnet, welches eine Fluidströmung von dem Filteranschluss 11b in den Druckraum 33 erlaubt und in Gegenrichtung verhindert. Die erste Öffnung 34a ist an einem Ende oder Rand eines ersten Fluidkanals 30a (siehe Fig. 6) oder innerhalb eines ersten Fluidkanals 30a angeordnet, sodass der erste Fluidkanal 30a sich beiderseits der ersten Öffnung 34a erstreckt (siehe Fig. 7). Die zweite Öffnung 34b ist an einem Ende oder Rand eines zweiten Fluidkanals 30b (siehe Fig. 6) oder innerhalb eines zweiten Fluidkanal 30b angeordnet, sodass der zweite Fluidkanal 30b sich beiderseits der zweiten Öffnung 34b erstreckt (siehe Fig. 7).

Das Hauptentlüftungsventil 13 umfasst ein erstes Vorsteuerventil 14a und ein zweites Vorsteuerventil 14b, die jeweils ein von einem SMA-Element betätigbares Ventilelement aufweisen (vgl. Fig. 8). Das erste Vorsteuerventil 14a ist einerseits mit dem Druckraum 33 des Hauptentlüftungsventils 13 und andererseits mit dem filterseitigen Hauptentlüftungskanal 12b (siehe Fig. 6) oder dem filterseitigen Nebenentlüftungskanal 15b (siehe Fig. 2, 3, 4) fluidisch verbunden. Das zweite Vorsteuerventil 14b ist einerseits mit dem Druckraum 33 des Hauptentlüftungsventils 13 und andererseits mit dem tankseitigen Hauptentlüftungskanal 12a oder einem tankseitigen Nebenentlüftungskanal 15a (siehe Fig. 2, 3, 4) fluidisch verbunden.

Insbesondere Fig. 6 zeigt, dass die beiden Vorsteuerventile 14a, 14b eine umfassende Steuerung des Hauptentlüftungsventils 13 sowohl bei Überdruck als auch bei Unterdruck im Kraftstofftank ermöglichen. Bei Überdruck (im Vergleich zu Atmosphärendruck) im Kraftstofftank 4 herrscht zunächst auch im Druckraum 33 Überdruck und das Hauptentlüftungsventil 13 ist geschlossen. Durch Öffnen des ersten Vorsteuerventils 14a wird eine fluidische Verbindung zum Atmosphärendruck geöffnet, wodurch sich der Überdruck im Druckraum 33 abbaut und sich schließlich das Hauptentlüftungsventil 13 öffnet. Bei Unterdruck (im Vergleich zu Atmosphärendruck) im Kraftstofftank 4 ist der Druckraum 33 zunächst fluidisch mit dem Atmosphärendruck verbunden und das Hauptentlüftungsventil 33 ist geschlossen. Durch Öffnen des zweiten Vorsteuerventils 14b wird eine fluidische Verbindung zum Unterdruck im Kraftstofftank 4 geöffnet, wodurch sich der Druck im Druckraum 33 abbaut und sich schließlich das Hauptentlüftungsventil 13 öffnet.

Zur Sicherstellung des für das Öffnen des Hauptentlüftungsventils 33 erforderlichen Druckabbaus im Druckraum 33 durch die Vorsteuerventile 14a, 14b muss sichergestellt werden, dass über das jeweils geöffnete Vorsteuerventil 14a, 14b mehr Fluid ausströmt als über die erste Öffnung 34a bzw. die zweite Öffnung 34b in den Druckraum 33 einströmt. Hierzu ist vorgesehen, dass der maximale Strömungsdurchmesser der ersten Öffnung 34a mit dem ersten Rückschlagventil 32a kleiner als der maximale Strömungsdurchmesser des ersten Vorsteuerventils 14a ist und dass der maximale Strömungsdurchmesser der zweiten Öffnung 34b mit dem zweiten Rückschlagventil 32b kleiner als der Strömungsdurchmesser des zweiten Vorsteuerventils 14a ist.

Anhand der Fig. 6 und 7 soll nachfolgend die grundsätzliche Funktionsweise bzw. der Aufbau des Hauptentlüftungsventils 13 genauer dargestellt und erläutert werden. Bei einer Betankung des Kraftstofftanks 4 wird mit Volumenströmen von größer 40l/min gerechnet, wobei der Druck im Kraftstofftank 4 gering gehalten werden muss, damit der einströmende Kraftstoff im Einfüllrohr 6 nicht vorzeitig ansteigt und zum Abschalten der Zapfpistole führt. Dies wird vorliegend durch das als vorgesteuertes Membranventil ausgebildete Hauptentlüftungsventil 13 erreicht. Steigt der Druck im Kraftstofftank 4 an, das heißt entsteht dort ein Überdruck im Vergleich zum Atmosphärendruck, strömt das Fluid (Gas) aus dem Kraftstofftank 4 durch die Entlüftungsleitung 3a, den Tankanschluss 11a in den Hauptentlüftungskanal 12, genauer den tankseitigen Hauptentlüftungskanal 12a. Das Ventilmembran 27 ist geschlossen, das heißt das Fluid kann nicht zum Aktivkohlefilter 5 weiter strömen. Über den ersten Fluidkanal 30a, die erste Öffnung 34a und das offene erste Rückschlagventil 32a strömt das Fluid in den Druckraum 33 des Hauptentlüftungsventils 13. Das zweite Rückschlagventil 32b ist geschlossen, ebenso die beiden Vorsteuerventile 14a, 14b. Daher baut sich im Druckraum 33 ebenfalls ein Überdruck im Vergleich zum Atmosphärendruck auf. Die Ventilmembran 27 wird daher gegen die Öffnung 31 des filterseitigen Hautentlüftungskanals 12b gedrückt, das Ventilelement ist somit in seiner Schließstellung und damit das Hauptentlüftungsventil 13 geschlossen. Es kann kein Fluid aus dem Kraftstofftank 4 durch den Hauptentlüftungskanal 12 in den Aktivkohlefilter 5 strömen.

Überdruck im Kraftstofftank 4 kann auch bei geschlossenem Kraftstofftank 4 entstehen, beispielsweise durch Erwärmung.

Damit Fluid aus dem Kraftstofftank 4 durch den Hauptentlüftungskanal 12 in den Aktivkohlefilter 5 strömen und damit der Überdruck im Kraftstofftank 4 abgebaut werden kann, muss das Hauptentlüftungsventil 13 geöffnet werden. Hierzu muss der Druck im Druckraum 33 und damit an der Druckseite 27a der Ventilmembran 27 soweit reduziert werden, dass sich die Ventilmembran 27 aufgrund des auf dessen Strömungsseite 27b im Bereich des tankseitigen Hauptentlüftungskanals 12a wirkenden Fluiddrucks von der Öffnung 31 des filterseitigen Hauptentlüftungskanals 12b abhebt, das Ventilelement somit in seine Freigabestellung übergeht und dadurch das Hauptentlüftungsventil 13 öffnet und den Hauptentlüftungskanal 12 freigibt. Die Druckreduzierung im Druckraum 33 erfolgt durch Öffnen des ersten Vorsteuerventils 14a. Dadurch kann Fluid aus dem Druckraum 33 zu dem Aktivkohlefilter 5 strömen. Da das erste Rückschlagventil 32a weiterhin geöffnet ist, strömt zwar weiterhin Fluid aus dem Kraftstofftank 4 in den Druckraum 33, allerdings ist dieser nachströmende Volumenstrom des Fluids deutlich kleiner als der abströmende Volumenstrom zum Aktivkohlefilter 5 hin, da der Strömungsdurchmesser der ersten Öffnung 34a mit dem ersten Rückschlagventil 32a deutlich kleiner als der Strömungsdurchmesser des geöffneten ersten Vorsteuerventils 14a ist. Somit wird der Druck im Druckraum 33 durch das Öffnen des ersten Vorsteuerventils 14a reduziert, das Hauptentlüftungsventil 13 öffnet sich und der Hauptentlüftungskanal 12 wird für den Fluidstrom vom Kraftstofftank 4 zum Aktivkohlefilter 5 und damit für den Druckabbau im Kraftstofftank 4 freigegeben. Das Fluid kann somit vom tankseitigen Hauptentlüftungskanal 12a durch das Hauptentlüftungsventil 13 in den filterseitigen Hauptentlüftungskanal 12b strömen, was in Fig. 6 durch gestrichelte Pfeile F angedeutet ist.

Im Falle von Unterdruck im Kraftstofftank 4, der beispielsweise durch Abkühlung entstehen kann, kann der Druckausgleich ebenfalls kontrolliert über das Hauptentlüftungsventils 13 erfolgen. Sinkt der Druck im Kraftstofftank 4 ab, das heißt entsteht dort ein Unterdruck im Vergleich zum Atmosphärendruck, strömt Fluid (Gas bzw. Luft) über den Aktivkohlefilter 5 durch die Entlüftungsleitung 3b, den Filteranschluss 11b in den Hauptentlüftungskanal 12, genauer den filterseitigen Hauptentlüftungskanal 12b. Das Ventilmembran 27 ist geschlossen, das heißt das Fluid kann nicht zum Kraftstofftank 4 weiter strömen. Über den zweiten Fluidkanal 30b, die zweite Öffnung 34b und das offene zweite Rückschlagventil 32b strömt das Fluid in den Druckraum 33 des Hauptentlüftungsventils 13. Das erste Rückschlagventil 32a ist geschlossen, ebenso die beiden Vorsteuerventile 14a, 14b. Daher herrscht im Druckraum 33 im Wesentlichen Atmosphärendruck und damit ein höherer Druck als im tankseitigen Hauptentlüftungskanal 12a und damit an dem Bereich der Strömungsseite 27b der Ventilmembran 27, der an den tankseitigen Hauptentlüftungskanal 12 a angrenzt. Das Ventilmembran 27 wird daher gegen die Öffnung 31 des filterseitigen Hautentlüftungskanals 12b gedrückt, das Ventilelement ist somit in seiner Schließstellung und damit das Hauptentlüftungsventil 13 geschlossen. Es kann kein Fluid vom Aktivkohlefilter 5 durch den Hauptentlüftungskanal 12 in den Kraftstofftank 4 strömen.

Damit Fluid vom Aktivkohlefilter 5 durch den Hauptentlüftungskanal 12 in den Kraftstofftank 4 strömen und damit der Unterdruck im Kraftstofftank 4 abgebaut werden kann, muss das Hauptentlüftungsventil 13 geöffnet werden. Hierzu muss der Druck im Druckraum 33 und damit an der Druckseite 27a der Ventilmembran 27 soweit reduziert werden, dass sich die Ventilmembran 27 aufgrund des auf dessen Strömungsseite 27b im Bereich des filterseitigen Hauptentlüftungskanals 12b wirkenden Fluiddrucks (im Wesentlichen Atmosphärendruck) von der Öffnung 31 des filterseitigen Hauptentlüftungskanals 12b abhebt, das Ventilelement somit in seine Freigabestellung übergeht und dadurch das Hauptentlüftungsventil 13 öffnet und den Hauptentlüftungskanal 12 freigibt. Die Druckreduzierung im Druckraum 33 erfolgt durch Öffnen des zweiten Vorsteuerventils 14b. Dadurch kann Fluid aus dem Druckraum 33 in den Kraftstofftank 4 (in dem Unterdruck herrscht) strömen. Da das zweite Rückschlagventil 32b weiterhin geöffnet ist, strömt zwar weiterhin Fluid vom Aktivkohlefilter 5 in den Druckraum 33, allerdings ist dieser nachströmende Volumenstrom des Fluids deutlich kleiner als der abströmende Volumenstrom zum Kraftstofftank 4 hin, da der Strömungsdurchmesser der zweiten Öffnung 34b mit dem zweiten Rückschlagventil 32b deutlich kleiner als der Strömungsdurchmesser des geöffneten zweiten Vorsteuerventils 14b ist. Somit wird der Druck im Druckraum 33 durch das Öffnen des zweiten Vorsteuerventils 14b reduziert, das Hauptentlüftungsventil 13 öffnet sich und der Hauptentlüftungskanal 12 wird für den Fluidstrom vom Aktivkohlefilter 5 zum Kraftstofftank 4 und damit für den Druckaufbau im Kraftstofftank 4 freigegeben. Das Fluid kann somit vom filterseitigen Hauptentlüftungskanal 12b durch das Hauptentlüftungsventil 13 in den tankseitigen Hauptentlüftungskanal 12a strömen.

Durch alternatives oder zusätzliches Schalten der Nebenentlüftungsventile 18, 19 der Filter-Ventilgruppe 16 und/oder der Einfüllrohr-Ventilgruppe 17 lässt sich eine Feinregulierung des Entlüftungsvorganges (hierunter wird auch das Belüften bei Unterdruck im Kraftstofftank 4 verstanden) erreichen, indem neben dem und unabhängig vom Hauptentlüftungskanal 12 auch der Nebenentlüftungskanal 15 geöffnet oder geschlossen wird, wobei hier aufgrund der mehreren Nebenentlüftungsventile 18, 19 auch ein Öffnen bzw. Schließen in mehreren Stufen und damit eine entsprechende Feinregulierung des gesamten Fluid-Volumenstroms möglich ist.

Vorliegend wird bei dem Ventilsystem 2 als Vorsteuerventil 14a, 14b, als Filter-Nebenentlüftungsventile 18 der Filter-Ventilgruppe 16 sowie als Einfüllrohr-Nebenentlüftungsventile 19 der Einfüllrohr-Ventilgruppe 17 jeweils ein SMA-Ventil eingesetzt. In Fig. 8 ist exemplarisch ein Ventil 18 gezeigt, anhand dessen stellvertretend für die Ventile 14a, 14b, 18 und 19 Aufbau und Funktion eines SMA-Ventils erläutert werden soll. Durch den Einsatz solcher SMA-Ventile lässt sich das Ventilsystem 2 elektronisch steuern, indem einzelne Ventile gezielt angesteuert und betätigt werden, um eine gezielte bzw. gesteuerte bzw. geregelte Entlüftung des Kraftstofftanks 4 zu ermöglichen. Dies war bisher bei dem Einsatz rein mechanischer Ventile, die beispielsweise mittels Schwimmern oder Ähnlichem zwischen einer Öffnungsstellung und einer Schließstellung bewegt werden, nicht möglich.

Das SMA-Ventil 14a weist ein Ventilgehäuse auf, welches durch das Gehäuse 10 des Ventilsystems 2 gebildet ist und oberseitig von einem Gehäusedeckel und unterseitig von einem Gehäuseboden (beide nicht dargestellt) verschlossen ist. Das Ventilgehäuse umschließt einen Ventilraum 40 und bildet eine Ventilöffnung 41 aus. Innerhalb des Ventilraums 40 ist ein zwischen einer Schließstellung zum Verschließen der Ventilöffnung 41 und einer Öffnungsstellung zur Freigabe der Ventilöffnung 41 in einer Bewegungsrichtung B axial bewegbares Ventilelement 42 angeordnet. Zur Betätigung des Ventilelementes 42 in einer Öffnungsrichtung bzw. Hubrichtung H dient ein drahtförmiges SMA-Element 43 aus einer Formgedächtnislegierung, welches mit einem mittleren Abschnitt 43c an dem Ventilelement 42, genauer an dessen erstem Endabschnitt 42a gehalten ist. Zur Beaufschlagung mit Strom ist das SMA-Element 43 mit seinen Enden 43a, 43b mit der Leiterplatte 24 elektrisch verbunden.

Zur Bewegung des Ventilelementes 42 in einer Schließrichtung bzw. Rückstellrichtung R dient ein Rückstellelement 44, vorliegend eine Schraubendruckfeder, die einen zweiten Endabschnitt 42b des Ventilelementes 42 konzentrisch umgibt und sich mit einem ersten Ende an der Leiterplatte 24 und mit einem zweiten Ende an dem ersten Endabschnitt 42b des Ventilelementes 42, der gegenüber dem zweiten Endabschnitt 42b radial verbreitert ist, abstützt.

Zur Führung des Ventilelementes 42 während dessen Betätigung dient zum einen eine von dem Gehäuse gebildete Zwischenwand 45, zum anderen eine in der Leiterplatte 24 vorgesehene Ausnehmung 46, vorliegend in Form einer Durchgangsöffnung. Zur Führung des SMA-Elementes 43 ist die Zwischenwand 45 von sich in Bewegungsrichtung B erstreckenden Ausnehmungen 47 unterbrochen (vgl. Fig. 5). Um die Ventilöffnung 41 in der Schließstellung - wie in Fig. 8 gezeigt - zuverlässig zu verschließen, ist an dem der Ventilöffnung 41 zugewandten Endabschnitt 42a ein die Ventilöffnung 41 verschließendes Dichtelement 48 angeordnet, welches mit einem die Ventilöffnung 41 umgebendem Dichtsitz zusammenwirkt.

Zur Ansteuerung des Ventils 18 und zur Beaufschlagung des SMA-Elementes 43 mit Strom, um eine Verkürzung desselben und somit eine Betätigung des Ventilelementes 42 zu bewirken, sind die Enden 43a, 43b mit der Leiterplatte 24 elektrisch verbunden und zwar jeweils mittels eines Crimpverbinders 49. Die Enden 43a, 43b des SMA-Elementes 43 sind jeweils in einer Aufnahme 50 des Crimpverbinders 49 fixiert und somit mittelbar über die Crimpverbinder 49 mit der Leiterplatte 24 kontaktiert. Die Crimpverbinder 49 ragen senkrecht zu der Bewegungsrichtung B jeweils seitlich mit einem Überstand A₁ über die Leiterplatte 24 hinaus. Ferner erstrecken sich die Crimpverbinder 49 in Hubrichtung H von einer Oberseite 51a der Leiterplatte 24 und parallel zu dieser in Richtung des - nicht explizit dargestellten - Gehäusebodens, also mit einem Überstand A₂ ausgehend von der Oberseite 51a der Leiterplatte 24 in Richtung zu deren Unterseite 51b, wobei die Aufnahme 50 des Crimpverbinders 49 mit Abstand vor dem Gehäuseboden endet, also freischwebend innerhalb des Ventilraumes 40 angeordnet ist. Ein von der Aufnahme 50 beabstandeter Abschnitt 52 des Crimpverbinders 49 ist über Klemmmittel 53 elektrisch mit der Leiterplatte 24 verbunden. Dabei kann der Abschnitt 52 sowohl flächig auf der Oberseite 51a aufliegen als auch zumindest teilweise einen geringen Abstand zu der Oberseite 51a aufweisen. Um eine von Toleranzen der Leiterplatte 24 bzw. deren Oberseite 51a unabhängige Verbindung zu erreichen, ist der Crimpverbinder 49 bzw. dessen Abschnitt 52 vollständig minimal von der Oberseite 51a beabstandet und der Crimpverbinder 49 wird lediglich durch die Klemmmittel 53 getragen. Die Crimpverbinder 49 stellen somit die elektrische Verbindung zwischen den daran fixierten Enden 43a, 43b des SMA-Elementes 43 und der Leiterplatte 24 her. Durch die sowohl seitlich als auch in Hubrichtung H überstehenden Crimpverbinder 49 kann eine zusätzliche Länge des SMA-Elements 43, nämlich die Länge der Diagonale eines gedachten Rechteckes mit den Seitenlängen A₁ und A₂ zur Betätigung des Ventilelementes 42 genutzt werden, wodurch insgesamt eine Reduzierung der Bauhöhe des Ventils 18 und somit des gesamten Ventilsystems 2 erreicht wird. Die Leiterplatte 24 selbst wird durch einen in einen Aufnahmeraum 54 des Gehäuses 10 einsteckbaren Steckverbinder mit einem elektrischen Anschluss kontaktiert (vgl. Fig. 3, 4).

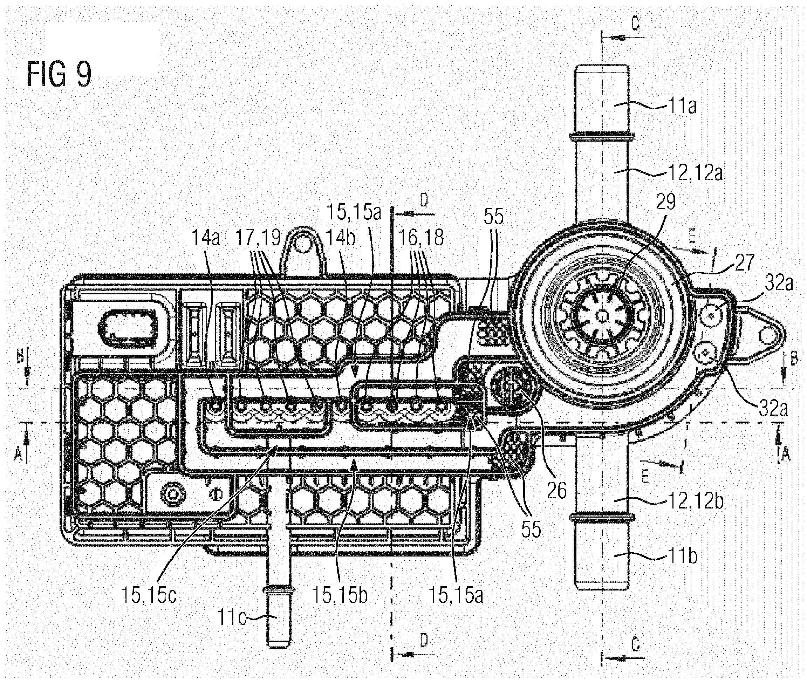

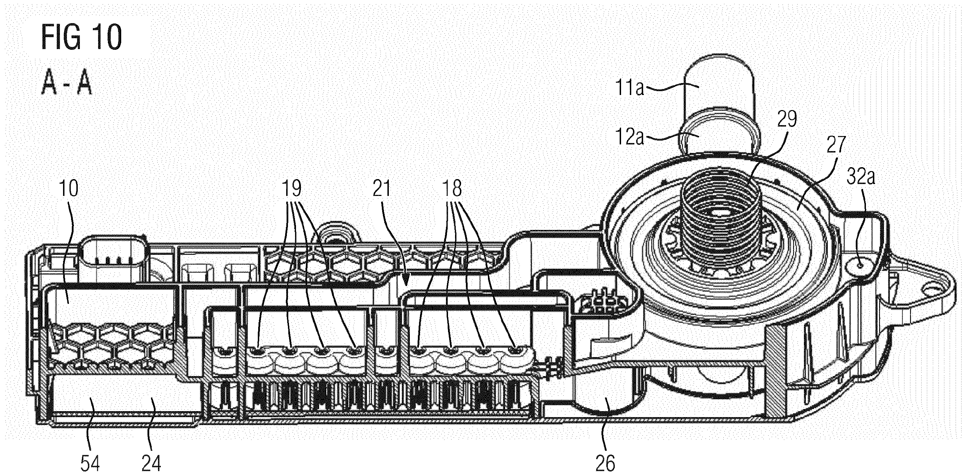

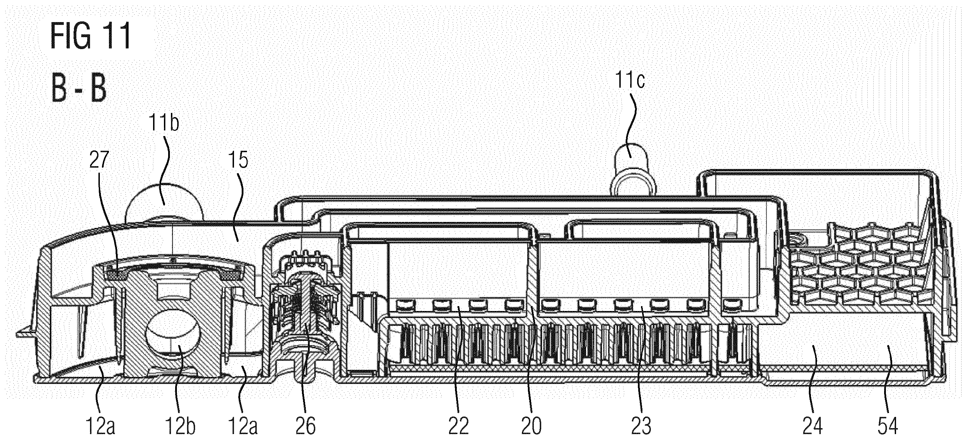

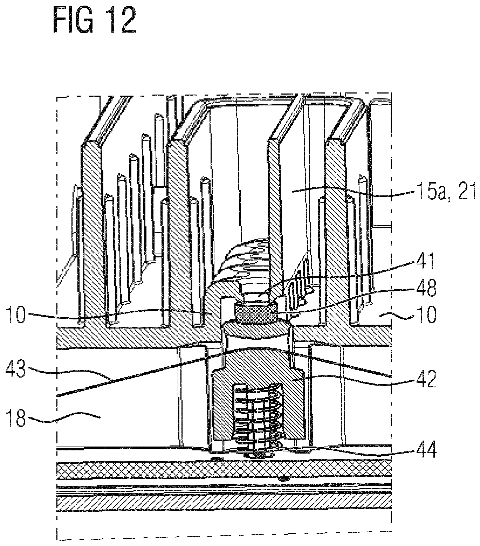

Fig. 9 zeigt das Ventilsystem 2 gemäß einer zweiten Ausführungsform für den Kraftstofftank 4, Fig. 10 und Fig. 11 jeweils einen Längsschnitt durch das Ventilsystem 2 gemäß Fig. 9 und Fig. 12 einen Ausschnitt des Ventilsystems 2 in vergrößerter Darstellung. Da Funktionalität und Aufbau des Ventilsystems 2 gemäß der zweiten Ausführungsform im Wesentlichen der des zuvor beschriebenen Ventilsystems 2 gemäß der ersten Ausführungsform entsprechen, sind die einzelnen Merkmale bzw. Komponenten des Ventilsystems 2 gemäß der zweiten Ausführungsform mit denselben Bezugszeichen versehen. Ferner gelten die vorstehend in Bezug auf das Ventilsystem 2 gemäß der ersten Ausführungsform gemachten Ausführungen im Wesentlichen auch für das Ventilsystem 2 gemäß der zweiten Ausführungsform.

Das Ventilsystem 2 umfasst ein Gehäuse 10 mit einem Tankanschluss 11a zum Verbinden des Ventilsystems 2 mit dem Kraftstofftank 4 bzw. mit der zum Kraftstofftank 4 führenden Entlüftungsleitung 3a. Ferner umfasst das Gehäuse 10 einen Filteranschluss 11b zum Verbinden des Ventilsystems 2 mit dem Aktivkohlefilter 5 bzw. der zum Aktivkohlefilter 5 führenden Entlüftungsleitung 3b sowie einen Einfüllrohranschluss 11c zum Verbinden des Ventilsystems 2 mit dem Einfüllrohr 6 des Kraftstofftanks 4 bzw. der zum Einfüllrohr 6 führenden Entlüftungsleitung 3c. Der Kraftstofftank 4, der Aktivkohlefilter 5 und das Einfüllrohr 6 sowie die das Ventilsystem 2 gegebenenfalls damit verbindenden Entlüftungsleitungen 3a, 3b, 3c sind in Fig. 9 nicht explizit dargestellt. Hierzu sei auf Fig. 1 und Fig. 2 verwiesen. Prinzipiell wäre es auch denkbar, das Ventilsystem 2 jeweils ohne Entlüftungsleitung direkt mit dem Kraftstofftank 4, dem Aktivkohlefilter 5 oder dem Einfüllrohr 6 zu verbinden bzw. das Ventilsystem 2 jeweils darin zu integrieren.

Oberseitig ist das Gehäuse 10 im Montagezustand von einem - nicht dargestellten - Gehäusedeckel, unterseitig von einem Gehäuseboden verschließbar, sodass es gegenüber der Umgebung pneumatisch abgedichtet ist.

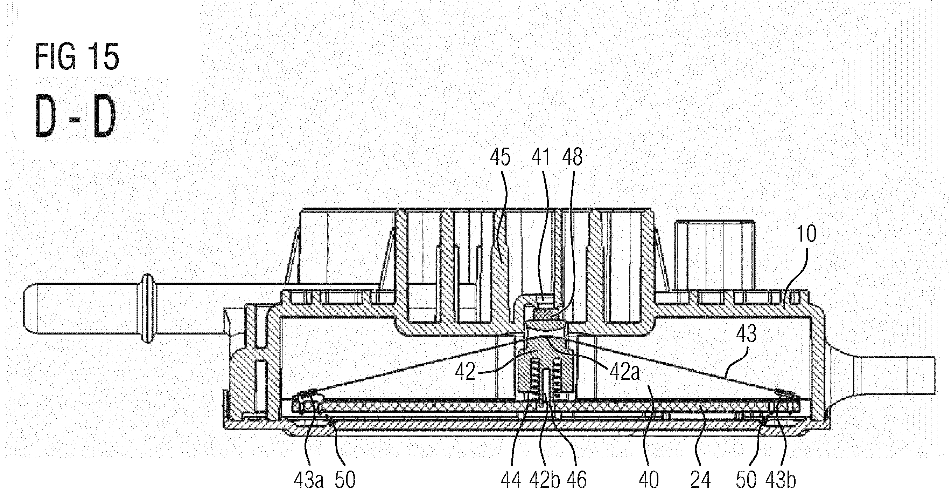

In dem weiteren Ausführungsbeispiel sind der Tankanschluss 11a und der Filteranschluss 11b über einen Hauptentlüftungskanal 12 fluidisch miteinander verbunden bzw. verbindbar. Ebenso wäre es möglich, dass der Hauptentlüftungskanal 12 den Tankanschluss 11a und den Einfüllrohranschluss 11c verbindet, was vorliegend nicht explizit dargestellt ist. In dem Hauptentlüftungskanal 12 ist ein Hauptentlüftungsventil 13 angeordnet, welches den Hauptentlüftungskanal 12 in einer Schließstellung verschließt und in einer Freigabestellung freigibt. Das Hauptentlüftungsventil 13 umfasst zudem zwei Vorsteuerventile, ein erstes Vorsteuerventil 14a und ein zweites Vorsteuerventil 14b, die als Ventile mit von einem SMA-Element betätigbaren Ventilelement ausgebildet sind. Hinsichtlich der Ausgestaltung der Vorsteuerventile 14a, 14b wird auch hier auf Fig. 8 oder Fig. 15 verwiesen.

In dem gezeigten Ausführungsbeispiel sind zudem der Tankanschluss 11a, genauer ein tankseitiger Hauptentlüftungskanal 12a, mit dem Filteranschluss 11b, genauer einem filterseitigen Hauptentlüftungskanal 12b, sowie der Tankanschluss 11a, genauer der tankseitige Hauptentlüftungskanal 12a, mit dem Einfüllrohranschluss 11c über einen Nebenentlüftungskanal 15 fluidisch verbunden. Im Nebenentlüftungskanal 15 ist eine Filter-Ventilgruppe 16 und eine Einfüllrohr-Ventilgruppe 17 angeordnet, die vorliegend beispielhaft jeweils vier Nebenentlüftungsventile, und zwar vier Filter-Nebenentlüftungsventile 18 der Filter-Ventilgruppe 16 und vier Einfüllrohr-Nebenentlüftungsventile 19 der Einfüllrohr-Ventilgruppe 17, umfassen, die jeweils ein von einem SMA-Element betätigbares Ventilelement aufweisen (vgl. Fig. 8 oder 15), welches den Nebenentlüftungskanal 15 zum Aktivkohlefilter 5 hin oder zum Einfüllrohr 6 hin schließt oder freigibt. In Fig. 12 ist ein Ausschnitt des Ventilsystems 2 dargestellt, welcher eine solche Ventilgruppe, vorliegend die Filter-Ventilgruppe 16 mit den Filter-Nebenentlüftungsventilen 18, zeigt.

Der Nebenentlüftungskanal 15 weist verschiedene Abschnitte bzw. Verzweigungen auf. Ein tankseitiger Nebenentlüftungskanal 15a führt von dem Tankanschluss 11a, genauer dem tankseitigen Hauptentlüftungskanal 12a, zu den Nebenentlüftungsventilen 18, 19 der Filter-Ventilgruppe 16 und der Einfüllrohr-Ventilgruppe 17, sodass Fluid bei der Entlüftung des Kraftstofftanks 4 durch den tankseitigen Nebenentlüftungskanal 15a zunächst zu den geöffneten Nebenentlüftungsventilen 18, 19, dann durch diese hindurch und schließlich von diesen zu dem Aktivkohlefilter 5 oder auch zu dem Einfüllrohr 6 strömen kann. Mit anderen Worten: Die Filter-Ventilgruppe 16 bzw. deren Filter-Nebenentlüftungsventile 18 sowie die Einfüllrohr-Ventilgruppe 17 bzw. deren Einfüllrohr-Nebenentlüftungsventile 19 sind einerseits jeweils mit dem tankseitigen Nebenentlüftungskanal 15a verbunden. Auf der fluidisch anderen Seite der Nebenentlüftungsventile 18, 19, also auf einer dem Filteranschluss 11b bzw. dem Einfüllrohranschluss 11c fluidisch zugewandten Seite der Nebenentlüftungsventile 18, 19 der Ventilgruppen 16, 17, weist der Nebenentlüftungskanal 15 zwei durch Trennwände voneinander getrennte Abschnitte auf, und zwar einen filterseitigen Nebenentlüftungskanal 15b sowie einen einfüllrohrseitigen Nebenentlüftungskanal 15c. Mit anderen Worten: Die Filter-Ventilgruppe 16 ist auf ihrer anderen Seite somit mit dem filterseitigen Nebenentlüftungskanal 15b, die Einfüllrohr-Ventilgruppe 17 ist auf ihrer anderen Seite somit mit dem einfüllrohseitigen Nebenentlüftungskanal 15c verbunden.

Bei der zweiten Ausführungsform sind der tankseitige Hauptentlüftungskanal 12a und der tankseitige Nebenentlüftungskanal 15a sowie der filterseitige Hauptentlüftungskanal 12b und der filterseitige Nebenentlüftungskanal 15b in unterschiedlichen Ebenen des Ventilsystems 2 angeordnet und über Gitter 55 fluidisch verbunden.

Der tankseitige Nebenentlüftungskanal 15a bildet im Bereich der Nebenentlüftungsventile 18, 19 bzw. der Ventilgruppen 16, 17 eine gemeinsame erste Ventilkammer 21 aus, durch die jedem der Nebenentlüftungsventile 18, 19 aus dem Kraftstofftank 4 entweichendes Fluid zugeführt werden kann. Der filterseitige Nebenentlüftungskanal 15b bildet eine zweite Ventilkammer 22 aus und der einfüllrohrseitige Nebenentlüftungskanal 15c bildet eine gemeinsame dritte Ventilkammer 23 aus. Die zweite Ventilkammer und die dritte Ventilkammer sind durch eine Trennwand 20 fluidisch voneinander getrennt.

All vorstehend beschriebenen Kanäle 12, 12a, 12b, 15, 15a, 15b, 15c sind einstückig mit dem Gehäuse 10 des Ventilsystems 2 ausgebildet und durch entsprechende, an dem Gehäuse 10 ausgebildete Trennwände gebildet, wodurch die Anzahl der Bauteile des Ventilsystems 2 deutlich reduziert werden kann. Die Ventile (14a, 14b, 18, 19), die ein von einem SMA-Element betätigbares Ventilelement aufweisen, sind zudem auf einer gemeinsamen Leiterplatte 24 angeordnet. Auf der Leiterplatte 24 können ferner mehrere Sensoren 25 (hier nicht explizit gezeigt) integriert sein, beispielsweise Drucksensoren und/oder Temperatursensoren und/oder Lagesensoren und/oder Beschleunigungssensoren und/oder Sensoren zur Ermittlung der Gaszusammensetzung und damit der Qualität des Kraftstoffs, um Messwerte innerhalb des Ventilsystems 2 zu erfassen, die dann beispielsweise zur Ansteuerung des Ventilsystems 2 bzw. einzelner Ventile herangezogen werden können.

Das Ventilsystem 2 umfasst ferner ein Sicherheitsventil 26, vorliegend ein kombiniertes Sicherheitsventil sowohl für Überdruck als auch für Unterdruck, der sich möglicherweise innerhalb des Kraftstofftanks 4 aufbauen kann, insbesondere dann, wenn das Ventilsystem 2 selbst nicht betätigt wird. Hierfür mündet das Sicherheitsventil 26 bei dieser Ausführungsform einerseits in eine Zwischenkammer, die über ein Gitter 55 mit dem tankseitigen Hauptentlüftungskanal 15 verbunden ist. Andererseits ist das Sicherheitsventil 26 fluidisch mit dem filterseitigen Hauptentlüftungskanal 12b verbunden. Das Gehäuse des Sicherheitsventils 26 ist einstückig mit dem Gehäuse 10 des Ventilsystems 2 ausgebildet, bzw. ein Teil des Gehäuses 10 des Ventilsystems 2.

Des Weiteren kann auch das Ventilsystem 2 einen Kraftstoff-Abscheider und ein Überschlagventil aufweisen, welches beispielsweise in dem Kraftstoff-Abscheider integriert ist. Sofern ein Kraftstoff-Abscheider und/oder ein Überschlagventil vorgesehen sind, ist dieses zwischen dem Tankanschluss 11a und dem Kraftstofftank 4 oder auch in der tankseitigen Hauptentlüftungsleitung 12a integriert. Aufbau und Funktion solcher Kraftstoff-Abscheider und/oder Überschlagventile sind dem Fachmann aus dem Stand der Technik bekannt, sodass hier aus Gründen der Übersichtlichkeit auf eine separate Darstellung verzichtet wird.

Das Hauptentlüftungsventil 13 umfasst als Ventilelement eine Ventilmembran 27, die vorliegend kreisförmig ausgebildet ist. In einem Randbereich weist die Ventilmembran 27 einen umlaufenden U-förmigen Abschnitt auf, der in einen ebenfalls kreisförmigen, von dem Gehäuse 10 des Ventilsystems 2 ausgebildeten U-förmigen Dichtsitz 28 eingreift. Die Ventilmembran weist eine Druckseite 27a und eine Strömungsseite 27b auf, wobei an der Druckseite 27a ein Druckraum 33 des Hauptentlüftungsventils 13 vorgesehen ist. Ein ringförmiger äußerer Teilbereich der Strömungsseite 27b grenzt an den tankseitigen Hauptentlüftungskanal 12a an, ein innerer Teilbereich der Strömungsseite 27b grenzt an den filterseitigen Hauptentlüftungskanal 12b an. Die Ventilmembran 27 und damit das Ventilelement des Hauptentlüftungsventils 13 sind zwischen einer Schließstellung und einer Freigabestellung bewegbar. In der Schließstellung verschließt die Strömungsseite 27b der Ventilmembran 27 den Hauptentlüftungskanal 12, indem die Ventilmembran 27 an einer Öffnung 31 des filterseitigen Hauptentlüftungskanals 12b anliegt und diese fluiddicht verschließt. In der Freigabestellung gibt die Strömungsseite 27b der Ventilmembran 27 den Hauptentlüftungskanal 12 frei, indem die Ventilmembran 27 von der Öffnung 31 des filterseitigen Hauptentlüftungskanals 12 abgehoben ist und somit Fluid in den oder aus dem filterseitigen Hauptentlüftungskanal 12b strömen kann. Im Druckraum 33 ist an der Druckseite 27a der Ventilmembran 27 ein Vorspannelement 29, vorliegend eine Schraubendruckfeder, vorgesehen, von dem Kraft auf die Druckseite 27a der Ventilmembran 27 ausgeht, die - sofern sie nicht durch andere Kräfte kompensiert wird - die Strömungsseite 27b der Ventilmembran 27 gegen die Öffnung 31 des filterseitigen Hauptentlüftungskanals 12b drückt und diesen und damit das Hauptentlüftungsventil 13 dadurch verschließt.

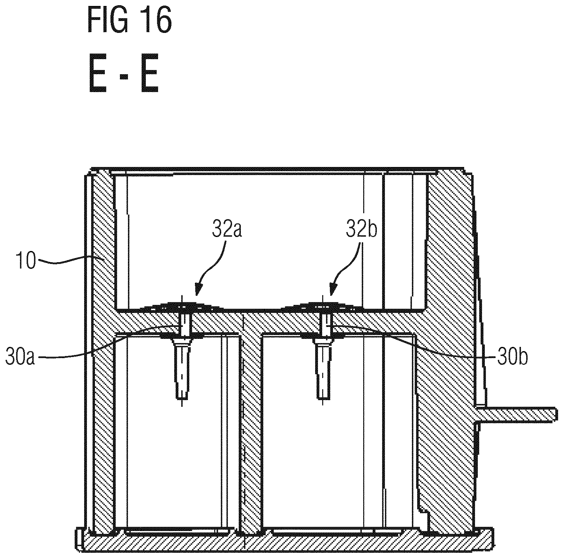

Der Druckraum 33 ist über eine erste Öffnung 34a fluidisch mit dem Tankanschluss 11a und über eine zweite Öffnung 34b fluidisch mit dem Filteranschluss 11b verbunden. In der ersten Öffnung 34a ist ein erstes Rückschlagventil 32a angeordnet, welches eine Fluidströmung vom Tankanschluss 11a in den Druckraum 33 erlaubt und in Gegenrichtung verhindert. In der zweiten Öffnung ist ein zweites Rückschlagventil 32b angeordnet, welches eine Fluidströmung von dem Filteranschluss 11b in den Druckraum 33 erlaubt und in Gegenrichtung verhindert. Ein Schnitt durch das Gehäuse 10 des Ventilsystems 2, in welchem die Fluidkanäle 30a, 30b ausgebildet sind, ist in Fig. 16 gezeigt. Die Rückschlagventile 32a, 32b sind somit in von dem Gehäuse 10 gebildeten Öffnungen 34a, 34b angeordnet. Die erste Öffnung 34a ist an einem Ende oder Rand eines ersten Fluidkanals 30a oder innerhalb eines ersten Fluidkanals 30a angeordnet, sodass der erste Fluidkanal 30a sich beiderseits der ersten Öffnung 34a erstreckt. Die zweite Öffnung 34b ist an einem Ende oder Rand eines zweiten Fluidkanals 30b oder innerhalb eines zweiten Fluidkanal 30b angeordnet, sodass der zweite Fluidkanal 30b sich beiderseits der zweiten Öffnung 34b erstreckt.

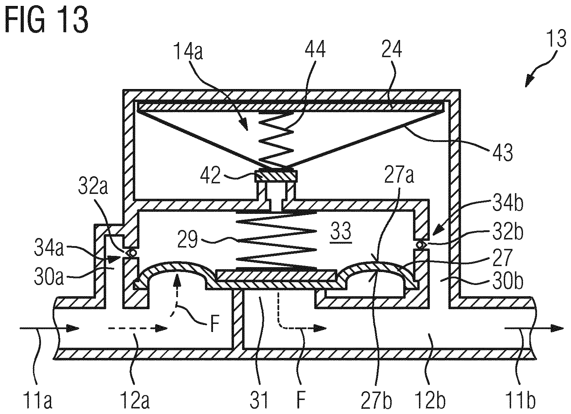

Das Hauptentlüftungsventil 13 umfasst ein erstes Vorsteuerventil 14a und ein zweites Vorsteuerventil 14b, die jeweils ein von einem SMA-Element betätigbares Ventilelement aufweisen. Das erste Vorsteuerventil 14a ist einerseits mit dem Druckraum 33 des Hauptentlüftungsventils 13 und andererseits mit dem filterseitigen Hauptentlüftungskanal 12b (siehe Fig. 13) oder dem filterseitigen Nebenentlüftungskanal 15b fluidisch verbunden. Das zweite Vorsteuerventil 14b ist einerseits mit dem Druckraum 33 des Hauptentlüftungsventils 13 und andererseits mit dem tankseitigen Hauptentlüftungskanal 12a oder einem tankseitigen Nebenentlüftungskanal 15a (siehe Fig. 9, 10, 11) fluidisch verbunden.

Insbesondere Fig. 13 zeigt, dass die beiden Vorsteuerventile 14a, 14b eine umfassende Steuerung des Hauptentlüftungsventils 13 sowohl bei Überdruck als auch bei Unterdruck im Kraftstofftank ermöglichen. Bei Überdruck (im Vergleich zu Atmosphärendruck) im Kraftstofftank 4 herrscht zunächst auch im Druckraum 33 Überdruck und das Hauptentlüftungsventil 13 ist geschlossen. Durch Öffnen des ersten Vorsteuerventils 14a wird eine fluidische Verbindung zum Atmosphärendruck geöffnet, wodurch sich der Überdruck im Druckraum 33 abbaut und sich schließlich das Hauptentlüftungsventil 13 öffnet. Bei Unterdruck (im Vergleich zu Atmosphärendruck) im Kraftstofftank 4 ist der Druckraum 33 zunächst fluidisch mit dem Atmosphärendruck verbunden und das Hauptentlüftungsventil 33 ist geschlossen. Durch Öffnen des zweiten Vorsteuerventils 14b wird eine fluidische Verbindung zum Unterdruck im Kraftstofftank 4 geöffnet, wodurch sich der Druck im Druckraum 33 abbaut und sich schließlich das Hauptentlüftungsventil 13 öffnet.

Zur Sicherstellung des für das Öffnen des Hauptentlüftungsventils 33 erforderlichen Druckabbaus im Druckraum 33 durch die Vorsteuerventile 14a, 14b muss sichergestellt werden, dass über das jeweils geöffnete Vorsteuerventil 14a, 14b mehr Fluid ausströmt als über die erste Öffnung 34a bzw. die zweite Öffnung 34b in den Druckraum 33 einströmt. Hierzu ist vorgesehen, dass der maximale Strömungsdurchmesser der ersten Öffnung 34a mit dem ersten Rückschlagventil 32a kleiner als der maximale Strömungsdurchmesser des ersten Vorsteuerventils 14a ist und dass der maximale Strömungsdurchmesser der zweiten Öffnung 34b mit dem zweiten Rückschlagventil 32b kleiner als der Strömungsdurchmesser des zweiten Vorsteuerventils 14a ist.

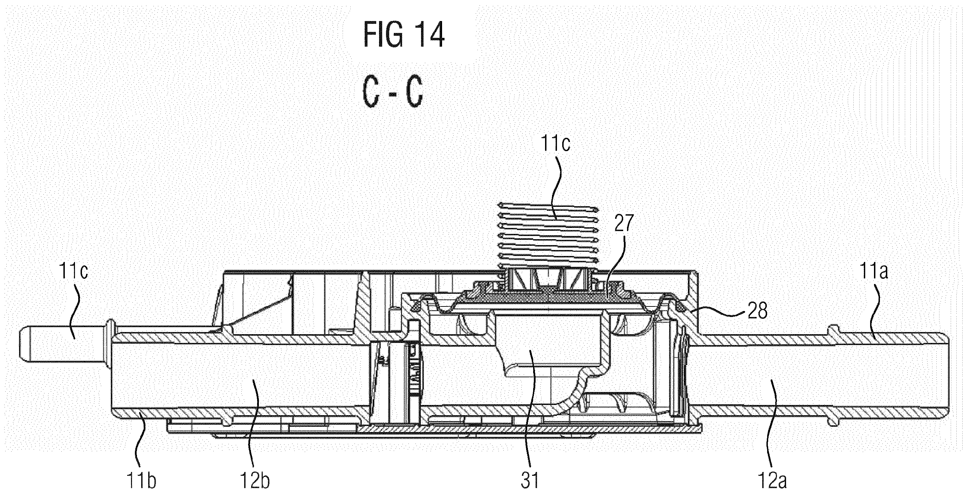

Anhand der Fig. 13 und 14 soll nachfolgend die grundsätzliche Funktionsweise bzw. der Aufbau des Hauptentlüftungsventils 13 genauer dargestellt und erläutert werden. Bei einer Betankung des Kraftstofftanks 4 wird mit Volumenströmen von größer 40l/min gerechnet, wobei der Druck im Kraftstofftank 4 gering gehalten werden muss, damit der einströmende Kraftstoff im Einfüllrohr 6 nicht vorzeitig ansteigt und zum Abschalten der Zapfpistole führt. Dies wird vorliegend durch das als vorgesteuertes Membranventil ausgebildete Hauptentlüftungsventil 13 erreicht. Steigt der Druck im Kraftstofftank 4 an, das heißt entsteht dort ein Überdruck im Vergleich zum Atmosphärendruck, strömt das Fluid (Gas) aus dem Kraftstofftank 4 durch die Entlüftungsleitung 3a, den Tankanschluss 11a in den Hauptentlüftungskanal 12, genauer den tankseitigen Hauptentlüftungskanal 12a. Das Ventilmembran 27 ist geschlossen, das heißt das Fluid kann nicht zum Aktivkohlefilter 5 weiter strömen. Über den ersten Fluidkanal 30a, die erste Öffnung 34a und das offene erste Rückschlagventil 32a strömt das Fluid in den Druckraum 33 des Hauptentlüftungsventils 13. Das zweite Rückschlagventil 32b ist geschlossen, ebenso die beiden Vorsteuerventile 14a, 14b. Daher baut sich im Druckraum 33 ebenfalls ein Überdruck im Vergleich zum Atmosphärendruck auf. Die Ventilmembran 27 wird daher gegen die Öffnung 31 des filterseitigen Hautentlüftungskanals 12b gedrückt, das Ventilelement ist somit in seiner Schließstellung und damit das Hauptentlüftungsventil 13 geschlossen. Es kann kein Fluid aus dem Kraftstofftank 4 durch den Hauptentlüftungskanal 12 in den Aktivkohlefilter 5 strömen.

Überdruck im Kraftstofftank 4 kann auch bei geschlossenem Kraftstofftank 4 entstehen, beispielsweise durch Erwärmung.

Damit Fluid aus dem Kraftstofftank 4 durch den Hauptentlüftungskanal 12 in den Aktivkohlefilter 5 strömen und damit der Überdruck im Kraftstofftank 4 abgebaut werden kann, muss das Hauptentlüftungsventil 13 geöffnet werden. Hierzu muss der Druck im Druckraum 33 und damit an der Druckseite 27a der Ventilmembran 27 soweit reduziert werden, dass sich die Ventilmembran 27 aufgrund des auf dessen Strömungsseite 27b im Bereich des tankseitigen Hauptentlüftungskanals 12a wirkenden Fluiddrucks von der Öffnung 31 des filterseitigen Hauptentlüftungskanals 12b abhebt, das Ventilelement somit in seine Freigabestellung übergeht und dadurch das Hauptentlüftungsventil 13 öffnet und den Hauptentlüftungskanal 12 freigibt. Die Druckreduzierung im Druckraum 33 erfolgt durch Öffnen des ersten Vorsteuerventils 14a. Dadurch kann Fluid aus dem Druckraum 33 zu dem Aktivkohlefilter 5 strömen. Da das erste Rückschlagventil 32a weiterhin geöffnet ist, strömt zwar weiterhin Fluid aus dem Kraftstofftank 4 in den Druckraum 33, allerdings ist dieser nachströmende Volumenstrom des Fluids deutlich kleiner als der abströmende Volumenstrom zum Aktivkohlefilter 5 hin, da der Strömungsdurchmesser der ersten Öffnung 34a mit dem ersten Rückschlagventil 32a deutlich kleiner als der Strömungsdurchmesser des geöffneten ersten Vorsteuerventils 14a ist. Somit wird der Druck im Druckraum 33 durch das Öffnen des ersten Vorsteuerventils 14a reduziert, das Hauptentlüftungsventil 13 öffnet sich und der Hauptentlüftungskanal 12 wird für den Fluidstrom vom Kraftstofftank 4 zum Aktivkohlefilter 5 und damit für den Druckabbau im Kraftstofftank 4 freigegeben. Das Fluid kann somit vom tankseitigen Hauptentlüftungskanal 12a durch das Hauptentlüftungsventil 13 in den filterseitigen Nebenentlüftungskanal 15b strömen.

Im Falle von Unterdruck im Kraftstofftank 4, der beispielsweise durch Abkühlung entstehen kann, kann der Druckausgleich ebenfalls kontrolliert über das Hauptentlüftungsventils 13 erfolgen. Sinkt der Druck im Kraftstofftank 4 ab, das heißt entsteht dort ein Unterdruck im Vergleich zum Atmosphärendruck, strömt Fluid (Gas bzw. Luft) über den Aktivkohlefilter 5 durch die Entlüftungsleitung 3b, den Filteranschluss 11b in den Hauptentlüftungskanal 12, genauer den filterseitigen Hauptentlüftungskanal 12b. Das Ventilmembran 27 ist geschlossen, das heißt das Fluid kann nicht zum Kraftstofftank 4 weiter strömen. Über den zweiten Fluidkanal 30b, die zweite Öffnung 34b und das offene zweite Rückschlagventil 32b strömt das Fluid in den Druckraum 33 des Hauptentlüftungsventils 13. Das erste Rückschlagventil 32a ist geschlossen, ebenso die beiden Vorsteuerventile 14a, 14b. Daher herrscht im Druckraum 33 im Wesentlichen Atmosphärendruck und damit ein höherer Druck als im tankseitigen Hauptentlüftungskanal 12a und damit an dem Bereich der Strömungsseite 27b der Ventilmembran 27, der an den tankseitigen Hauptentlüftungskanal 12 a angrenzt. Das Ventilmembran 27 wird daher gegen die Öffnung 31 des filterseitigen Hautentlüftungskanals 12b gedrückt, das Ventilelement ist somit in seiner Schließstellung und damit das Hauptentlüftungsventil 13 geschlossen. Es kann kein Fluid vom Aktivkohlefilter 5 durch den Hauptentlüftungskanal 12 in den Kraftstofftank 4 strömen.

Damit Fluid vom Aktivkohlefilter 5 durch den Hauptentlüftungskanal 12 in den Kraftstofftank 4 strömen und damit der Unterdruck im Kraftstofftank 4 abgebaut werden kann, muss das Hauptentlüftungsventil 13 geöffnet werden. Hierzu muss der Druck im Druckraum 33 und damit an der Druckseite 27a der Ventilmembran 27 soweit reduziert werden, dass sich die Ventilmembran 27 aufgrund des auf dessen Strömungsseite 27b im Bereich des filterseitigen Hauptentlüftungskanals 12b wirkenden Fluiddrucks (im Wesentlichen Atmosphärendruck) von der Öffnung 31 des filterseitigen Hauptentlüftungskanals 12b abhebt, das Ventilelement somit in seine Freigabestellung übergeht und dadurch das Hauptentlüftungsventil 13 öffnet und den Hauptentlüftungskanal 12 freigibt. Die Druckreduzierung im Druckraum 33 erfolgt durch Öffnen des zweiten Vorsteuerventils 14b. Dadurch kann Fluid aus dem Druckraum 33 in den Kraftstofftank 4 (in dem Unterdruck herrscht) strömen. Da das zweite Rückschlagventil 32b weiterhin geöffnet ist, strömt zwar weiterhin Fluid vom Aktivkohlefilter 5 in den Druckraum 33, allerdings ist dieser nachströmende Volumenstrom des Fluids deutlich kleiner als der abströmende Volumenstrom zum Kraftstofftank 4 hin, da der Strömungsdurchmesser der zweiten Öffnung 34b mit dem zweiten Rückschlagventil 32b deutlich kleiner als der Strömungsdurchmesser des geöffneten zweiten Vorsteuerventils 14b ist. Somit wird der Druck im Druckraum 33 durch das Öffnen des zweiten Vorsteuerventils 14b reduziert, das Hauptentlüftungsventil 13 öffnet sich und der Hauptentlüftungskanal 12 wird für den Fluidstrom vom Aktivkohlefilter 5 zum Kraftstofftank 4 und damit für den Druckaufbau im Kraftstofftank 4 freigegeben. Das Fluid kann somit vom filterseitigen Hauptentlüftungskanal 12b durch das Hauptentlüftungsventil 13 in den tankseitigen Hauptentlüftungskanal 12a strömen.

Durch alternatives oder zusätzliches Schalten der Nebenentlüftungsventile 18, 19 der Filter-Ventilgruppe 16 und/oder der Einfüllrohr-Ventilgruppe 17 lässt sich eine Feinregulierung des Entlüftungsvorganges (hierunter wird auch das Belüften bei Unterdruck im Kraftstofftank 4 verstanden) erreichen, indem neben dem und unabhängig vom Hauptentlüftungskanal 12 auch der Nebenentlüftungskanal 15 geöffnet oder geschlossen wird, wobei hier aufgrund der mehreren Nebenentlüftungsventile 18, 19 auch ein Öffnen bzw. Schließen in mehreren Stufen und damit eine entsprechende Feinregulierung des gesamten Fluid-Volumenstroms möglich ist.

Vorliegend wird bei dem Ventilsystem 2 als Vorsteuerventil 14a, 14b, als Filter-Nebenentlüftungsventile 18 der Filter-Ventilgruppe 16 sowie als Einfüllrohr-Nebenentlüftungsventile 19 der Einfüllrohr-Ventilgruppe 17 jeweils ein SMA-Ventil eingesetzt. In Fig. 8 und Fig. 15 ist exemplarisch ein Ventil 18 gezeigt, anhand dessen stellvertretend für die Ventile 14a, 14b, 18 und 19 Aufbau und Funktion eines SMA-Ventils erläutert werden soll. Durch den Einsatz solcher SMA-Ventile lässt sich das Ventilsystem 2 elektronisch steuern, indem einzelne Ventile gezielt angesteuert und betätigt werden, um eine gezielte bzw. gesteuerte bzw. geregelte Entlüftung des Kraftstofftanks 4 zu ermöglichen. Dies war bisher bei dem Einsatz rein mechanischer Ventile, die beispielsweise mittels Schwimmern oder Ähnlichem zwischen einer Öffnungsstellung und einer Schließstellung bewegt werden, nicht möglich.

Das SMA-Ventil 14a weist ein Ventilgehäuse auf, welches durch das Gehäuse 10 des Ventilsystems 2 gebildet ist und oberseitig von einem Gehäusedeckel (nicht dargestellt) und unterseitig von einem Gehäuseboden verschlossen ist. Das Ventilgehäuse umschließt einen Ventilraum 40 und bildet eine Ventilöffnung 41 aus. Innerhalb des Ventilraums 40 ist ein zwischen einer Schließstellung zum Verschließen der Ventilöffnung 41 und einer Öffnungsstellung zur Freigabe der Ventilöffnung 41 in einer Bewegungsrichtung B axial bewegbares Ventilelement 42 angeordnet. Zur Betätigung des Ventilelementes 42 in einer Öffnungsrichtung bzw. Hubrichtung H dient ein drahtförmiges SMA-Element 43 aus einer Formgedächtnislegierung, welches mit einem mittleren Abschnitt 43c an dem Ventilelement 42, genauer an dessen erstem Endabschnitt 42a gehalten ist. Zur Beaufschlagung mit Strom ist das SMA-Element 43 mit seinen Enden 43a, 43b mit der Leiterplatte 24 elektrisch verbunden.

Zur Bewegung des Ventilelementes 42 in einer Schließrichtung bzw. Rückstellrichtung R dient ein Rückstellelement 44, vorliegend eine Schraubendruckfeder, die einen zweiten Endabschnitt 42b des Ventilelementes 42 konzentrisch umgibt und sich mit einem ersten Ende an der Leiterplatte 24 und mit einem zweiten Ende an dem ersten Endabschnitt 42b des Ventilelementes 42, der gegenüber dem zweiten Endabschnitt 42b radial verbreitert ist, abstützt.

Zur Führung des Ventilelementes 42 während dessen Betätigung dient zum einen eine von dem Gehäuse gebildete Zwischenwand 45, zum anderen eine in der Leiterplatte 24 vorgesehene Ausnehmung 46, vorliegend in Form einer Durchgangsöffnung. Zur Führung des SMA-Elementes 43 ist die Zwischenwand 45 von sich in Bewegungsrichtung B erstreckenden Ausnehmungen 47 unterbrochen (vgl. Fig. 5). Um die Ventilöffnung 41 in der Schließstellung - wie in Fig. 8 gezeigt - zuverlässig zu verschließen, ist an dem der Ventilöffnung 41 zugewandten Endabschnitt 42a ein die Ventilöffnung 41 verschließendes Dichtelement 48 angeordnet, welches mit einem die Ventilöffnung 41 umgebendem Dichtsitz zusammenwirkt.

Zur Ansteuerung des Ventils 18 und zur Beaufschlagung des SMA-Elementes 43 mit Strom, um eine Verkürzung desselben und somit eine Betätigung des Ventilelementes 42 zu bewirken, sind die Enden 43a, 43b mit der Leiterplatte 24 elektrisch verbunden und zwar jeweils mittels eines Crimpverbinders 49. Die Enden 43a, 43b des SMA-Elementes 43 sind jeweils in einer Aufnahme 50 des Crimpverbinders 49 fixiert und somit mittelbar über die Crimpverbinder 49 mit der Leiterplatte 24 kontaktiert. Ein von der Aufnahme 50 beabstandeter Abschnitt 52 des Crimpverbinders 49 ist über Klemmmittel 53 elektrisch mit der Leiterplatte 24 verbunden. Dabei kann der Abschnitt 52 sowohl flächig auf der Oberseite 51a aufliegen als auch zumindest teilweise einen geringen Abstand zu der Oberseite 51a aufweisen. Um eine von Toleranzen der Leiterplatte 24 bzw. deren Oberseite 51a unabhängige Verbindung zu erreichen, ist der Crimpverbinder 49 bzw. dessen Abschnitt 52 vollständig minimal von der Oberseite 51a beabstandet und der Crimpverbinder 49 wird lediglich durch die Klemmmittel 53 getragen. Die Crimpverbinder 49 stellen somit die elektrische Verbindung zwischen den daran fixierten Enden 43a, 43b des SMA-Elementes 43 und der Leiterplatte 24 her. Die Leiterplatte 24 selbst wird durch einen in einen Aufnahmeraum 54 des Gehäuses 10 einsteckbaren Steckverbinder mit einem elektrischen Anschluss kontaktiert (vgl. Fig. 10, 11).

Insgesamt schlägt die Erfindung somit ein Ventilsystem vor, das universell einsetzbar ist und insbesondere an verschiedene Tanks beispielsweise für unterschiedliche Kraftfahrzeuge anpassbar ist, gegebenenfalls auch ohne bauliche Veränderung. Insbesondere aufgrund der elektrischen Ansteuerbarkeit bei Einsatz der SMA-Ventile oder Magnetventile oder DEA-Ventile sind auch über die Ansteuersoftware und deren Anpassung verschiedene Varianten möglich.

Bei entsprechender Ausstattung übernimmt das vorgeschlagene Ventilsystem alle Ventilfunktionen, die zur Be- und Entlüftung eines Tanksystems erforderlich sind. Je nach konkreter Ausführung kann der ein- oder ausströmende Fluidstrom kontrolliert und in Stufen gesteuert werden durch entsprechende Ansteuerung der Ventile, die auch unterschiedliche Querschnitte aufweisen können und/oder gegebenenfalls auch sequentiell oder parallel angesteuert werden können. Die Mehrzahl an Ventilen sorgt auch für eine Redundanz des Ventilsystems. Beim Versagen eines Ventils kann auf weitere Ventile zum Entlüften bzw. Belüften zurückgegriffen werden. Auch kann kontrolliert und gesteuert werden, welchen Weg (über den Aktivkohlefilter und/oder über das Einfüllrohr) welche Menge des Fluid nimmt. Gegebenenfalls kann auch das gesamte Fluid dem Einfüllrohr oder alternativ dem Aktivkohlefilter zugeführt werden.

Durch einen hohen Integrationsgrad und insbesondere durch den Einsatz von SMA-Ventilen oder Magnetventilen oder DEA-Ventilen kann der Bauraum für das Ventilsystem im Vergleich zu bekannten vergleichbaren Ventilsystemen deutlich reduziert werden.

### Bezugszeichen liste

- 1: Tanksystem
- 2: Ventilsystem
- 3a, b, c: Entlüftungsleitungen
- 4: Kraftstofftank
- 5: Aktivkohlefilter
- 6: Einfüllrohr
- 7a, b: Ventil
- 8: Atmosphäre
- 9: Verbrennungsmotor
- 10: Gehäuse
- 11a: Tankanschluss
- 11b: Filteranschluss
- 11c: Einfüllrohranschluss
- 12: Hauptentlüftungskanal
- 12a: tankseitiger Hauptentlüftungskanal
- 12b: filterseitiger Hauptentlüftungskanal
- 13: Hauptentlüftungsventil
- 14a: erstes Vorsteuerventil
- 14b: zweites Vorsteuerventile
- 15: Nebenentlüftungskanal
- 15a: tankseitiger Nebenentlüftungskanal
- 15b: filterseitiger Nebenentlüftungskanal
- 15c: einfüllrohrseitiger Nebenentlüftungskanal
- 16: Filter-Ventilgruppe
- 17: Einfüllrohr-Ventilgruppe
- 18: Filter-Nebenentlüftungsventil
- 19: Einfüllrohr-Nebenentlüftungsventil
- 20: Trennwand
- 21: erste Ventilkammer
- 22: zweite Ventilkammer
- 23: dritte Ventilkammer
- 24: Leiterplatte
- 25: Sensor
- 26: Sicherheitsventil
- 27: Ventilelement, Ventilmembran
- 27a: Druckseite
- 27b: Strömungsseite
- 28: Dichtsitz
- 29: Vorspannelement
- 30a: erster Fluidkanal
- 30b: zweiter Fluidkanal
- 31: Öffnung des filterseitigen Hauptentlüftungskanals 12b
- 32a: erstes Rückschlagventil
- 32b: zweites Rückschlagventil
- 33: Druckraum des Hauptentlüftungsventils 13
- 34a: erste Öffnung
- 34b: zweite Öffnung
- 40: Ventilraum
- 41: Ventilöffnung
- 42: Ventilelement
- 42a: erster Endabschnitt
- 42b: zweiter Endabschnitt
- 43: SMA-Element
- 43a, 43b: Ende des SMA-Elementes
- 43c: mittlerer Abschnitt des SMA-Elementes
- 44: Rückstellelement
- 45: Zwischenwand
- 46: Ausnehmung in der Leiterplatte
- 47: Ausnehmung in der Zwischenwand
- 48: Dichtelement
- 49: Crimpverbinder
- 50: Aufnahme des Crimpverbinders
- 51a: Oberseite der Leiterplatte
- 51b: Unterseite der Leiterplatte
- 52: Abschnitt des Crimpverbinders
- 53: Klemmmittel
- 54: Aufnahmeraum des Gehäuses
- 55: Gitter

- Fₐ: Strömung des Fluides
- F_{b}: Strömung des Fluides
- F: Strömung des Fluides

- B: Bewegungsrichtung des Stellelements
- H: Hubrichtung
- R: Rückstellrichtung
- A₁: seitlicher Überstand des Crimpverbinders
- A₂: axialer Überstand des Crimpverbinders

## Patentansprüche

1. Ventilsystem (2) für einen Kraftstofftank (4), insbesondere Ventilsystem (2) zur kontrollierten und/oder gesteuerten und/oder geregelten Ausbringung oder Einbringung eines Fluids, vorzugsweise Gas oder Luft oder mit Kohlenwasserstoffen angereicherte oder gesättigte Luft, aus dem oder in den Kraftstofftank (4),
a) umfassend ein Gehäuse (10)
a1) mit einem Tankanschluss (11a) zum Verbinden des Ventilsystems (2) mit einem Kraftstofftank (4) und
a2) mit einem Filteranschluss (11b) zum Verbinden des Ventilsystems (2) mit einem Aktivkohlefilter (5) und mit einem Einfüllrohranschluss (11c) zum Verbinden des Ventilsystems (2) mit einem Einfüllrohr (6) des Kraftstofftanks (4),
b) wobei entweder der Tankanschluss (11a) und der Filteranschluss (11b) oder der Tankanschluss (11a) und der Einfüllrohranschluss (11c) über einen Hauptentlüftungskanal (12) fluidisch miteinander verbunden oder verbindbar sind, wobei in dem Hauptentlüftungskanal (12) zumindest ein Hauptentlüftungsventil (13) mit einem Ventilelement (27) angeordnet ist, welches den Hauptentlüftungskanal (12) in einer Schließstellung verschließt und in einer Freigabestellung freigibt,
c) wobei
c1) der Tankanschluss (11a) oder ein tankseitiger Hauptentlüftungskanal (12a) und der Filteranschluss (11b) oder ein filterseitiger Hauptentlüftungskanal (12b) und/oder
c2) der Tankanschluss (11a) oder der tankseitige Hauptentlüftungskanal (12a) und der Einfüllrohranschluss (11c) oder ein einfüllrohrseitiger Hauptentlüftungskanal
c3) über einen Nebenentlüftungskanal (15) fluidisch miteinander verbunden oder verbindbar sind,
d) wobei in dem Nebenentlüftungskanal (15) zumindest eine Ventilgruppe (16, 17) mit zumindest einem Nebenentlüftungsventil (18, 19) angeordnet ist, welches den Nebenentlüftungskanal (15) schließt oder freigibt.

2. Ventilsystem (2) nach Anspruch 1, wobei das Ventilelement (27) des in dem Hauptentlüftungskanal (12) angeordneten Hauptentlüftungsventils (13) eine Ventilmembran (27) mit einer Druckseite (27a) und einer Strömungsseite (27b) ist oder umfasst, wobei an der Druckseite (27a) der Ventilmembran (27) ein Druckraum (33) des Hauptentlüftungsventils (13) vorgesehen ist, und wobei die Strömungsseite (27b) der Ventilmembran (27) in der Schließstellung des Ventilelements (27) den Hauptentlüftungskanal (12) verschließt und in der Freigabestellung des Ventilelements (27) den Hauptentlüftungskanal (12) freigibt.

3. Ventilsystem (2) nach Anspruch 2, wobei im Druckraum (33) an der Druckseite (27a) der Ventilmembran (27) ein Vorspannelement (29) vorgesehen ist, von dem eine Kraft auf die Druckseite (27a) der Ventilmembran (27) ausgeht.

4. Ventilsystem (2) nach Anspruch 2 oder 3, wobei der Druckraum (33) über eine erste Öffnung (34a) fluidisch mit dem Tankanschluss (11a) und/oder über eine zweite Öffnung (34b) fluidisch mit dem Filteranschluss (11b) und/oder dem Einfüllrohranschluss (11c) verbunden ist.

5. Ventilsystem (2) nach Anspruch 4, wobei in der ersten Öffnung (34a) ein erstes Rückschlagventil (32a) angeordnet ist, welches eine Fluidströmung vom Tankanschluss (11a) in den Druckraum (33) erlaubt und in Gegenrichtung verhindert, und/oder wobei in der zweiten Öffnung ein zweites Rückschlagventil (32b) angeordnet ist, welches eine Fluidströmung von dem Filteranschluss (11b) und/oder dem Einfüllrohranschluss (11c) in den Druckraum (33) erlaubt und in Gegenrichtung verhindert.

6. Ventilsystem (2) nach einem der Ansprüche 2 bis 5, wobei das Hauptentlüftungsventil (13) zumindest ein erstes Vorsteuerventil (14a) umfasst, welches einerseits mit dem Druckraum (33) des Hauptentlüftungsventils (13) und andererseits mit dem filterseitigen Hauptentlüftungskanal (12b) oder dem einfüllrohrseitigen Hauptentlüftungskanal und/oder einem filterseitigen Nebenentlüftungskanal (15b) oder einem einfüllrohrseitigen Nebenentlüftungskanal (15c) fluidisch verbunden oder verbindbar ist.

7. Ventilsystem (2) nach Anspruch 5 und nach Anspruch 6, wobei der maximale Strömungsdurchmesser der ersten Öffnung (34a) kleiner als der maximale Strömungsdurchmesser des ersten Vorsteuerventils (14a) ist.

8. Ventilsystem (2) nach einem der Ansprüche 2 bis 7, wobei das Hauptentlüftungsventil (13) zumindest ein zweites Vorsteuerventil (14b) umfasst, welches einerseits mit dem Druckraum (33) des Hauptentlüftungsventils (13) und andererseits mit dem tankseitigen Hauptentlüftungskanal (12a) und/oder einem tankseitigen Nebenentlüftungskanal (15a) fluidisch verbunden oder verbindbar ist.

9. Ventilsystem (2) nach Anspruch 5 und nach Anspruch 8, wobei der maximale Strömungsdurchmesser der zweiten Öffnung (34b) kleiner als der Strömungsdurchmesser des zweiten Vorsteuerventils (14a) ist.

10. Ventilsystem (2) nach einem der vorhergehenden Ansprüche, wobei der Tankanschluss (11a) oder der tankseitige Hauptentlüftungskanal (12a), der Filteranschluss (11b) oder der filterseitiger Hauptentlüftungskanal (12b) und der Einfüllrohranschluss (11c) oder der einfüllrohrseitiger Hautverbindungskanal fluidisch über den Nebenentlüftungskanal (15) miteinander verbunden oder verbindbar sind, wobei in dem Nebenentlüftungskanal (15) mindestens zwei Ventilgruppen (16, 17) angeordnet sind, und zwar mindestens eine Filter-Ventilgruppe (16) mit zumindest einem Filter-Nebenentlüftungsventil (18) und mindestens eine Einfüllrohr-Ventilgruppe (17) mit zumindest einem Einfüllrohr-Nebenentlüftungsventil (19), wobei das oder die Filter-Nebenentlüftungsventile (18) der Filter-Ventilgruppe (16) einerseits mit einem oder dem tankseitigen Nebenentlüftungskanal (15a) und andererseits mit einem oder dem filterseitigen Nebenentlüftungskanal (15b) fluidisch verbunden oder verbindbar sind und das oder die Einfüllrohr-Nebenentlüftungsventile (19) der Einfüllrohr-Ventilgruppe (17) einerseits mit dem tankseitigen Nebenentlüftungskanal (15a) und andererseits mit einem oder dem einfüllrohrseitigen Nebenentlüftungskanal (15c) fluidisch verbunden oder verbindbar sind.

11. Ventilsystem (2) nach Anspruch 10, wobei die Filter-Ventilgruppe (16) zwei oder drei oder vier oder mehrere Filter-Nebenentlüftungsventile (18) und/oder die Einfüllrohr-Ventilgruppe (17) zwei oder drei oder vier oder mehrere Einfüllrohr-Nebenentlüftungsventile (19) aufweist.

12. Ventilsystem (2) nach einem der vorhergehenden Ansprüche, wobei das Ventilsystem (2) ein Sicherheitsventil (26), insbesondere für Über- und/oder Unterdruck aufweist, welches fluidisch mit dem tankseitigen Hauptentlüftungskanal (12a) und/oder dem tankseitigen Nebenentlüftungskanal (15a) und/oder fluidisch mit dem filterseitigen Hauptentlüftungskanal (12b) und/oder dem filterseitigen Nebenentlüftungskanal (15b) verbunden ist, wobei vorzugsweise vorgesehen ist, dass das Gehäuse des Sicherheitsventils (26) einstückig mit dem Gehäuse (10) des Ventilsystems (2) ausgebildet ist.

13. Ventilsystem (2) nach einem der vorhergehenden Ansprüche, wobei die Nebenentlüftungs-Ventile (18, 19) und/oder die Vorsteuerventile (14a, 14b) und/oder alle Ventile (14a, 14b, 18, 19) mit einem von einem SMA-Element (43) betätigbaren Ventilelement (42) oder einem DEA-Aktuator und/oder alle Magnetventile auf einer gemeinsamen Leiterplatte (24) angeordnet sind.

14. Ventilsystem (2) nach Anspruch 13, wobei auf der Leiterplatte (24) mehrere Sensoren (25), insbesondere Drucksensoren und/oder Temperatursensoren und/oder Lagesensoren und/oder Beschleunigungssensoren und/oder Sensoren zur Ermittlung der Gaszusammensetzung, angeordnet oder integriert sind.

15. Ventilsystem (2) nach einem der vorhergehenden Ansprüche, wobei dieses einen Kraftstoff-Abscheider und/oder ein Überschlagventil, wobei das Überschlagventil insbesondere dem Kraftstoff-Abscheider integriert ist, umfasst, wobei der Kraftstoff-Abscheider und/oder das Überschlagventil vorzugsweise zwischen dem Tankanschluss (11a) und dem Kraftstofftank (4) oder in dem tankseitigen Hauptentlüftungskanal (12a) integriert sind.

## Claims

1. Valve system (2) for a fuel tank (4), in particular valve system (2) for the controlled and/or guided and/or regulated output or insertion of a fluid, preferably gas or air or air enriched or saturated with hydrocarbon atoms, from or into the fuel tank (4),
a) comprising a housing (10)
a1) having a tank connection (11a) for connecting the valve system (2) to a fuel tank (4) and
a2) having a filter connection (11b) for connecting the valve system (2) to an active carbon filter (5) and to a filling tube connection (11c) for connecting the valve system (2) to a filling tube (6) of the fuel tank (4),
b) wherein either the tank connection (11a) and the filter connection (11b) or the tank connection (11a) and the filling tube connection (11c) are connected or can be connected fluidically to each other via a main ventilation channel (12), wherein at least one main ventilation valve (13) having a valve element (27) is arranged in the main ventilation channel (12), said valve element sealing the main ventilation channel (12) in a closed position and releasing it in a release position,
c) wherein
c1) the tank connection (11a) or a main ventilation channel (12a) on the tank side and the filter connection (11b) or a main ventilation channel (12b) on the filter side and/or
c2) the tank connection (11a) or the main ventilation channel (12a) on the tank side and the filling tube connection (11c) or a main ventilation channel on the filling side,
c3) are connected or can be connected fluidically to each other via an ancillary ventilation channel (15),
d) wherein, in the ancillary ventilation channel (15), at least one valve group (16, 17) is arranged with at least one ancillary ventilation valve (18, 19), which closes or releases the ancillary ventilation channel (15).

2. Valve system (2) according to claim 1, wherein the valve element (27) of the main ventilation valve (13) arranged in the main ventilation channel (12) is or comprises a valve membrane (27) having a pressure side (27a) and a current side (27b), wherein a pressure chamber (33) of the main ventilation valve (13) is provided on the pressure side (27a) of the valve membrane (27), and wherein the current side (27b) of the valve membrane (27) seals the main ventilation channel (12) in the closed position of the valve element (27) and releases the main ventilation channel (12) in the release position of the valve element (27).

3. Valve system (2) according to claim 2, wherein a pre-tensioning element (29) is provided in the pressure chamber (33) on the pressure side (27a) of the valve membrane (27), from which pre-tensioning element a force is aimed at the pressure side (27a) of the valve membrane (27).

4. Valve system (2) according to claim 2 or 3, wherein the pressure chamber (33) is connected fluidically to the tank connection (11a) via a first opening (34a) and/or fluidically to the filter connection (11b) via a second opening (34b) and/or to the filling tube connection (11c).

5. Valve system (2) according to claim 4, wherein a first check valve (32a) is arranged in the first opening (34a), said check valve allowing a fluid current from the tank connection (11a) into the pressure chamber (33) and preventing it in the opposite direction, and/or wherein a second check valve (32b) is arranged in the second opening, said check valve allowing a fluid current from the filter connection (11b) and/or the filling tube connection (11c) into the pressure chamber (33) and preventing it in the opposite direction.

6. Valve system (2) according to one of claims 2 to 5, wherein the main ventilation valve (13) comprises at least one first pilot valve (14a), which is connected or can be connected fluidically on one side to the pressure chamber (33) of the main ventilation valve (13) and on the other side to the main ventilation channel (12b) on the filter side or the main ventilation channel on the filling tube side and/or an ancillary ventilation channel (15b) on the filter side or an ancillary ventilation channel (15c) on the filling tube side.

7. Valve system (2) according to claim 5 and according to claim 6, wherein the maximum current diameter of the first opening (34a) is smaller than the maximum current diameter of the first pilot valve (14a).

8. Valve system (2) according to one of claims 2 to 7, wherein the main ventilation channel (13) comprises at least one second pilot valve (14b), which is connected or can be connected fluidically on one side to the pressure chamber (33) of the main ventilation valve (13) and on the other side to the main ventilation channel (12a) on the tank side and/or an ancillary ventilation channel (15a) on the tank side.

9. Valve system (2) according to claim 5 and according to claim 8, wherein the maximum current diameter of the second opening (34b) is smaller than the current diameter of the second pilot valve (14a).

10. Valve system (2) according to one of the preceding claims, wherein the tank connection (11a) or the main ventilation channel (12a) on the tank side, the filter connection (11b) or the main ventilation channel (12b) on the filter side and the filling tube connection (11c) or the main connection channel on the filling tube side are connected or can be connected to one another fluidically via the ancillary ventilation channel (15), wherein at least two valve groups (16, 17) are arranged in the ancillary ventilation channel (15), that is at least one filter valve group (16) with at least one filter ancillary ventilation valve (18) and at least one filling tube valve group (17) having at least one filling tube ancillary ventilation valve (19), wherein the filter ancillary ventilation valve or valves (18) of the filter valve group (16) are connected or can be connected fluidically on one side to an or the ancillary ventilation channel (15a) on the tank side and, on the other side, to a or the ancillary ventilation channel (15b) on the filter side, and the filling tube ancillary ventilation valve or valves (19) of the filling tube valve group (17) are connected or can be connected fluidically on one side to the ancillary ventilation channel (15a) on the tank side and on the other side to an or the ancillary ventilation channel (15c) on the filling tube side.

11. Valve system (2) according to claim 10, wherein the filter valve group (16) has two or three or four or several filter ancillary ventilation valves (18), and/or the filling tube valve group (17) has two or three or four or several filling tube ancillary ventilation valves (19).

12. Valve system (2) according to one of the preceding claims, wherein the valve system (2) has a safety valve (26), in particular for positive and/or negative pressure, which is connected fluidically to the main ventilation channel (12a) on the tank side and/or the ancillary ventilation channel (15a) on the tank side and/or fluidically to the main ventilation channel (12b) on the filter side and/or the ancillary ventilation channel (15b) on the filter side, wherein it is preferably provided that the housing of the safety valve (26) is formed integrally with the housing (10) of the valve system (2).

13. Valve system (2) according to one of the preceding claims, wherein the ancillary ventilation valves (18, 19) and/or the pilot valves (14a, 14b) and/or all valves (14a, 14b, 18, 19) having a valve element (42) that can be actuated by an SMA element (43) or having a DEA actuator and/or all magnetic valves are arranged on a common circuit board (24).

14. Valve system (2) according to claim 13, wherein several sensors (25), in particular pressure sensors and/or temperature sensors and/or positional sensors and/or acceleration sensors and/or sensors for determining the gas composition, are arranged or integrated on the circuit board (24).

15. Valve system (2) according to one of the preceding claims, wherein it comprises a fuel precipitator and/or a rollover valve, wherein the rollover valve is integrated, in particular, into the fuel precipitator, wherein the fuel precipitator and/or the rollover valve are preferably integrated between the tank connection (11a) and the fuel tank (4) or in the main ventilation channel (12a) on the tank side.

## Revendications

1. Système (2) de soupape d'un réservoir (4) à carburant, notamment système (2) de soupape pour faire sortir ou entrer de manière contrôlée et/ou commandée et/ou régulée un fluide, de préférence du gaz ou de l'air ou de l'air saturé ou enrichi en hydrocarbures, du réservoir ou dans le réservoir (4) à carburant,
a) comprenant un boîtier (10)
a1) ayant un raccord (11a) de réservoir pour relier le système (2) de vanne à un réservoir (4) à carburant et
a2) comprenant un raccord (11b) de filtre pour relier le système (2) de soupape à un filtre (5) à charbon actif et comprenant un raccord (11c) de tuyau de remplissage pour relier le système (2) de vanne à un tuyau (6) de remplissage du réservoir (4) à carburant,
b) dans lequel ou bien le raccord (11a) de réservoir et le raccord (11b) de filtre ou bien le raccord (11a) de réservoir et le raccord (11c) de tuyau de remplissage communiquent entre eux fluidiquement par un conduit (12) principal de dégazage ou peuvent le faire, dans lequel, dans le conduit (12) principal de dégazage est monté au moins une soupape (13) principale de dégazage ayant un élément (27) de soupape, qui ferme le conduit (12) principal de dégazage dans une position de fermeture et le dégage dans une position de dégagement,
c) dans lequel
c1) le raccord (11a) de réservoir ou un conduit (12a) principal de dégazage du côté du réservoir et le raccord (11b) de filtre ou un conduit (12b) principal de dégazage du côté du filtre et/ou
c2) le raccord (11a) de réservoir ou le conduit (12a) principal de dégazage du côté du réservoir et le raccord (11c) du tuyau de remplissage ou un conduit principal de dégazage du côté du tuyau de remplissage
c3) communiquent fluidiquement entre eux ou peuvent le faire par un conduit (15) de dégazage,
d) dans lequel dans le conduit (15) auxiliaire de dégazage est monté au moins un groupe (16, 17) de soupape, ayant au moins une soupape (18, 19) auxiliaire de dégazage, qui ferme ou dégage le conduit (15) auxiliaire de dégazage.

2. Système (2) de soupape suivant la revendication 1, dans lequel l'élément (27) de soupape de la soupape (13) principale de dégazage, montée dans le conduit (12) principal de dégazage, est ou comprend une membrane (27) de soupape ayant un côté (27a) de pression et un côté (27b) d'écoulement, dans lequel il est prévu du côté (27a) de pression de la membrane (27) de soupape un espace (33) de pression de la soupape (13) principale de dégazage et dans lequel le côté (27b) d'écoulement de la membrane (27) de soupape ferme dans la position de fermeture de l'élément (27) de soupape le conduit (12) principal de dégazage et dégage le conduit (12) principal de dégazage dans la position de dégagement de l'élément (27) de soupape.

3. Système (2) de soupape suivant la revendication 2, dans lequel dans l'espace (33) de pression il est prévu, du côté (27a) de pression de la membrane (27) de soupape, un élément (29) de précontrainte, par lequel une force est appliquée au côté (27a) de pression de la membrane (27) de soupape.

4. Système (2) de soupape suivant la revendication 2 ou 3, dans lequel l'espace (33) de pression communique fluidiquement par une première ouverture (34a) avec le raccord (11a) de réservoir et/ou par une deuxième ouverture (34b) fluidiquement avec le raccord (11b) de filtre et/ou avec le raccord (11c) de tuyau de remplissage.

5. Système (2) de soupape suivant la revendication 4, dans lequel dans la première ouverture (34a) est monté un clapet (32a) anti-retour, qui permet un écoulement de fluide du raccord (11a) de réservoir à l'espace (33) de pression et l'empêche en sens contraire, et/ou dans la deuxième ouverture est monté un deuxième clapet (32b) anti-retour qui permet un écoulement de fluide du raccord (11b) de fluide et/ou du raccord (11c) de tuyau de remplissage à l'espace (33) de pression et l'empêche en sens contraire.

6. Système (2) de soupape suivant l'une des revendications 2 à 5, dans lequel la soupape (13) principale de dégazage comprend au moins une première soupape (14a) pilote, qui communique fluidiquement ou peut le faire d'une part avec l'espace (33) de pression de la soupape (13) principale de dégazage et d'autre part avec le conduit (12b) principal de dégazage du côté du filtre ou avec le conduit principal de dégazage du côté du tuyau de remplissage et/ou avec un conduit (15b) auxiliaire de dégazage du côté du filtre ou avec un conduit (15c) auxiliaire de dégazage du côté du tuyau de remplissage.

7. Système (2) de soupape suivant la revendication 5 et suivant la revendication 6, dans lequel le diamètre d'écoulement maximum de la première ouverture (34a) est plus petit que le diamètre d'écoulement maximum de la première soupape (14a) pilote.

8. Système (2) de soupape suivant l'une des revendications 2 à 7, dans lequel la soupape (13) principale de dégazage comprend au moins une deuxième soupape (14b) pilote, qui communique fluidiquement ou peut le faire d'une part avec l'espace (33) de pression de la soupape (13) principale de dégazage et d'autre part avec le conduit (12a) principal de dégazage du côté du réservoir et/ou avec un conduit (15a) auxiliaire de dégazage du côté du réservoir.

9. Système (2) de soupape suivant la revendication 5 et suivant la revendication 8, dans lequel le diamètre maximum d'écoulement de la deuxième ouverture (34b) est plus petit que le diamètre d'écoulement de la deuxième soupape (14a) pilote.

10. Système (2) de soupape suivant l'une des revendications précédentes, dans lequel le raccord (11a) de réservoir ou le conduit (12a) principal de dégazage du côté du réservoir, le raccord (11b) de filtre ou le conduit (12b) principal de dégazage du côté du filtre et le raccord (11c) de tuyau de remplissage ou le conduit de communication principal du côté du tuyau de remplissage communiquent fluidiquement entre eux ou peuvent le faire par le conduit (15) auxiliaire de dégazage, dans lequel dans le conduit (15) auxiliaire de dégazage sont montés au moins deux groupes (16, 17) de soupapes et de fait au moins un groupe (16) de soupapes de filtre, ayant au moins une soupape (18) auxiliaire de dégazage de filtre, et au moins un groupe (17) de soupapes de tuyau de remplissage, ayant au moins une soupape (19) auxiliaire de dégazage de tuyau de remplissage, dans lequel la ou les soupapes (18) auxiliaires de dégazage de filtre du groupe (16) de soupapes de filtre communiquent fluidiquement ou peuvent le faire d'une part avec un ou le conduit (15a) auxiliaire de dégazage du côté du réservoir et d'autre part avec un ou le conduit (15b) auxiliaire de dégazage du côté du filtre, et le ou les soupapes (19) auxiliaires de dégazage de tuyau de remplissage du groupe (17) de soupape de tuyau de remplissage communiquent fluidiquement ou peuvent le faire d'une part avec le conduit (15a) auxiliaire de dégazage du côté du réservoir et d'autre part avec un ou avec le conduit (15c) auxiliaire de dégazage du côté du tuyau de remplissage.

11. Système (2) de soupape suivant la revendication 10, dans lequel le groupe (16) de soupapes de filtre a deux ou trois ou quatre ou plusieurs soupapes (18) auxiliaires de dégazage de filtre et/ou le groupe (17) de soupapes de tuyau de remplissage a deux ou trois ou quatre ou plusieurs soupapes (19) auxiliaires de dégazage de tuyau de remplissage.

12. Système (2) de soupape suivant l'une des revendications précédentes, dans lequel le système (2) de soupape a une soupape (26) de sûreté, notamment pour une surpression et/ou une dépression, qui communique fluidiquement avec le conduit (12a) principal de dégazage du côté du réservoir et/ou avec le conduit (15a) auxiliaire de dégazage du côté du réservoir et/ou fluidiquement avec le conduit (12b) principal de dégazage du côté du filtre et/ou avec le conduit (15b) auxiliaire de dégazage du côté du filtre, dans lequel il est prévu de préférence que le boîtier de la soupape (26) de sûreté soit constitué d'une pièce avec le boîtier (10) du système (2) de soupape.

13. Système (2) de soupape suivant l'une des revendications précédentes, dans lequel les soupapes (18, 19) auxiliaires de dégazage et/ou les soupapes (14a, 14b) pilotes et/ou toutes les soupapes (14a, 14b, 18, 19) sont, avec un élément (42) de soupape pouvant être actionné par un élément (43) SMA ou avec un actionneur DEA et/ou toutes les électrovannes, disposées sur une plaquette (24) à circuit imprimé commune.

14. Système (2) de soupape suivant la revendication 13, dans lequel sur la plaquette (24) à circuit-imprimé sont montés ou intégrés plusieurs capteurs (25), notamment des capteurs de pression et/ou des capteurs de température et/ou des capteurs de position et/ou des capteurs d'accélération et/ou des capteurs de détermination de la composition d'un gaz.

15. Système (2) de soupape suivant l'une des revendications précédentes, dans lequel celui-ci comprend un séparateur de carburant et/ou une soupape de décharge, la soupape de décharge étant intégrée notamment au séparateur de carburant, le séparateur de carburant et/ou la soupape de décharge étant intégré de préférence entre le raccord (11a) de réservoir et le réservoir (4) à carburant ou au conduit (12a) principal de dégazage du côté du réservoir.
